# EUROPEAN PATENT SPECIFICATION

(11) **EP 3 454 160 B1**
(45) Date of publication and mention of the grant of the patent: **01.01.2020**
(21) Application number: 18192607.2
(22) Date of filing: 04.09.2018
(51) Int. Cl.: G05D 16/06

(54) **DIFFERENTIAL PRESSURE CONTROL VALVE**
DIFFERENZDRUCKREGELVENTIL
VANNE DE CONTRÔLE DE LA PRESSION DIFFÉRENTIELLE

(30) Priority: 05.09.2017 IT 201700099507
(43) Date of publication of application: 13.03.2019
(73) Proprietor: FIMCIM S.P.A., 20121 Milano (MI) (IT)
(72) Inventor: CIMBERIO, Renzo, 28017 San Maurizio d'Opaglio (NO) (IT); CIMBERIO, Roberto, 28010 Ameno Fraz. Vacciago (NO) (IT); CRIVELLI, Stefano, 20121 Milano (IT); GUIDETTI, Tiziano, 28021 Borgomanero (NO) (IT)
(74) Representative: Brasca, Marco

(56) References cited:
- EP-A1- 2 848 846
- EP-A1- 3 165 987
- WO-A1-01/94818
- WO-A2-2006/053091
- DE-A1-102013 019 885

## Description

### Field of the invention

The invention regards the fluid valves industry and in particular it regards a differential pressure regulation valve.

### Prior art

Differential pressure control valves (DPCV) are valves provided with an inlet and an outlet in a main conduit, a membrane and a mobile slider with respect to the valve body, which identifies an opening with variable width for the through-flow of a fluid between the inlet and the outlet; the slider of the valve is fixed to the membrane, which is positioned - in advance - in a chamber partitioned thereby into a first portion placed in fluid communication with the main conduit, and a second portion hydraulically insulated from the first portion, which is in fluid communication with a control inlet. Differential pressure control valves are thus defined given that they enable keeping the pressure difference present between the first and the second portion of the chamber constant, irrespectively of the flow of the fluid which flows in the main conduit. Maintaining at least one predefined differential pressure represents a first operative configuration which is common to all DPCV valves.

Differential pressure control valves typically have a control which enables regulating the pressure differential present between the first and the second position of the chamber on several different levels; this control typically comprises a screw-actuated knob, which acts on a preload spring to which a slider is joined.

Differential pressure control valves are not limitedly suitable to be installed in installations, for example domestic, industrial or commercial installations, to enable balancing the flow for example directed towards cooling or heating systems or potable water dispensing systems. Differential pressure control valves are connected in a manner such that the control inlet is connected to an installation inlet or supply conduit, arranged upstream with respect to the user, while the valve, as it is, has the inlet and outlet of the main conduit thereof connected in series on the return conduit of the installation.

In conventional installations in which differential pressure control valves are installed, washing needs arise at times. In such washing condition, technically referred to as flushing, a strong water flow is imparted onto the inlet or supply conduit; flushing enables clearing the conduits of impurities that may have accumulated during installation and/or over time. The high increase of flow in the inlet or supply conduit of the installation leads to a pressure peak in the inlet or supply conduit of the installation which causes a sudden pressure increase which is detected by the valve at the second position of the membrane. Given that the calve is conceived to maintain a constant pressure differential, such pressure increase causes an immediate displacement of the slider to reduce the opening width between the inlet and the outlet on the main conduit. The displacement of the slider is unintentional during flushing given that it would hinder the proper outflow of the impurities along the installation. Thus, the valves of the known type are configured to obtain a second flushing operative configuration in which the slider is held in fixed position irrespective of the pressure differential that is created - in such configuration - between the first and the second portion of the chamber.

In conventional installations in which differential pressure control valves are installed, there at times arises the need for fully shutting the valve, to an extent of determining a complete stop of the fluid present in the installation. By interrupting the supply of water into the installation from upstream, thus on the inlet or supply conduit, the pressure drop detected in such conduit, causes a displacement of the valve slide so as to increase the opening width between the inlet and the outlet of the main conduit, with the aim of trying to keep the pressure differential constant. The valves of the known type are configured to obtain a shut-off operative configuration in which the slider is kept at a fixed position to completely shut off the through-flow between the inlet and the outlet on the main conduit, irrespective of the pressure differential that is created in such configuration between the first and the second portion.

Differential pressure regulation valves comprising a second flushing operative configuration and a third shut-off operative configuration are known from EP2848846A1. Such document discloses the displacement of a portion of the valve, in particular a knob, relatively screwed to the to the control for regulating the predefined values of the pressure differential, which - with respect to a first operative configuration in which the valve acts with a differential pressure regulation between the first and the second portion of the chamber - it is firstly disconnected from the control and subsequently re-installed in a different configuration on the body so as to obtain the flushing operative configuration. In order to obtain the first, the second (flushing) and the third (shut-off) operative configuration, the differential pressure regulation valve according to EP2848846A1 requires two controls: a first control which enables regulating the valve action pressure differential, and a second control, obtained by the aforementioned disconnectable knob, for the flushing operative configuration. Thus, according to this document the use of the valve is not active, and when passing at least from the first operative configuration to the second flushing operative configuration, there is at least one operative configuration - determined by the demounted knob - in which both the possibility of regulating the pressure differential and the flushing are absent. The behaviour of the valve in this intermediate operative configuration is unpredictable and it depends on the exact practical manufacturing of the valve. Thus, the applicant observed that the passing from the standard operative configuration to the flushing operative configuration may create unfavourable conditions for the operation of the installation.

Thus, in light of the drawbacks outlined above the object of the invention is to describe a valve capable of overcoming at least the drawbacks described above.

More in particular, the object of the present invention is to provide a valve capable of switching between the first, the second and the third operative configuration in an intuitive manner.

A further object of the present invention is to provide a valve capable of enabling to pass from said first, said second and said third operative configuration by actuating a single control element.

A further object of the present invention is to propose a robust and axially compact valve, thanks to which the installation of the valve in narrow environments too like those that can be found in domestic environments is made easier.

A further object of the present invention is to provide a valve suitable to correctly detect the pressure differential even in the presence of impurities in proximity of the membrane, reducing the risk of malfunctioning.

A further object of the present invention is to provide a valve whose shutting off is progressive, thus avoiding the occurrence of phenomena such as water hammer which could damage the conduits of the installation in which it is installed.

### Summary of the invention

In order to obtain the objects indicated above as well as others according to a first aspect of the invention, the Applicant provided a differential pressure control valve (100) for a first hydraulic installation, having:
- a valve body (1) provided with an inlet (1i), an outlet (1u), a channel that places the inlet (1i) in fluid communication with the outlet (1u), and an auxiliary chamber,
- a sealing element (9) which separates the channel from the auxiliary chamber (18c),
- a control inlet (18) in fluid communication with the auxiliary chamber (18c),
- a fluid intercepting element (3, 5, 22) at least partly operating in the channel,
   wherein the valve can be controlled in a first operative configuration, wherein the fluid intercepting element (3, 5, 22) defines -in the channel - a fluid through-flow opening between the inlet (1i) and the outlet (1u) having a variable width;
- a control member (10, 10c, 15, 25, 26) connected to the valve body (1) and active on the fluid intercepting element to control the valve in the first operative configuration,
the valve being characterised in that the control member is active on the fluid intercepting element for controlling the valve at least in a second operative configuration and at least in a third operative configuration, wherein:
- in the second operative configuration the fluid intercepting element (3, 5, 22) is blocked - with respect to the body (1) - in a first position conferring to the through-flow opening a pre-set width independent from the value taken by a pressure differential between a pressure (P-) present in the channel and a pressure (P+) present in the auxiliary chamber (18c);
- in the third operative configuration, the fluid intercepting element (3, 5, 22) is blocked - with respect to the body (1) - in a second position defining a complete fluid-tight closure of the through-flow opening between the inlet (1i) and the outlet (1u) of the valve, irrespective of the value taken by the pressure differential.

According to a second non-limiting aspect, that can be combined with the first aspect, the sealing element (9) is radially interposed between the fluid intercepting element (3, 5, 22) and the valve body (1).

According to a third non-limiting aspect, that can be combined with the second aspect, the fluid intercepting element (3, 5, 22) is coupled to the sealing element (9) so as to have a portion operating in the channel and a portion operating in the auxiliary chamber (18c).

According to a fourth non-limiting aspect, that can be combined with any of the preceding aspects, the fluid intercepting element (3, 5, 22) comprises at least one slider (3) which, at the first operative configuration of the valve, is axially slidable with respect to the valve body (1) along a pre-defined sliding axis (X) to define a plurality of positions relative to the valve body (1) determining the opening of a fluid through-flow opening having a variable width as a function of the pressure differential.

According to a fifth non-limiting aspect, that can be combined with the fourth aspect, the control member (10, 10c, 15, 25, 26) comprises at least:
- one manoeuvre element (15) actuatable from outside the valve body (1), and
- a rod (10) at least partly introduced in the slider (3) and axially displaceable with respect to the valve body (1) by the actuation of the manoeuvre element (15).

According to a sixth non-limiting aspect, that can be combined with the fifth aspect, the rod (10) is axially displaceable with respect to the slider (3) at least between the following relative positions:
- a position for minimum insertion into the slider (3),
- a position for maximum insertion into the slider (3),
- a plurality of intermediate positions between the minimum insertion position and the maximum insertion position,
and wherein:
- in the minimum insertion position, an abutment portion of the rod blocks the axial sliding of the slider (3) with respect to the valve body (1),
- in the minimum insertion position, at least the or a further abutment portion of the rod blocks the axial sliding of the slider (3) with respect to the valve body (1), and
- in the plurality of intermediate positions - the rod (10) enables the relative axial sliding of the slider with respect to the valve body (1).

According to a seventh non-limiting aspect, that can be combined with the sixth aspect, the manoeuvre element (15) can be manoeuvred in a closing direction to:
- displace the rod (10) in the maximum insertion position making the rod axially integrally joined to the slider (3) and to
- further displace the rod (10) and the slider (3) integrally joined with respect to the valve body (1) moving the valve (1) to the third operative configuration.

According to an eighth non-limiting aspect, that can be combined with the seventh aspect, at the third operative configuration of the valve the abutment portion of the rod (10) acts opposing, in particular in abutment, against a first end of the slider (3).

According to a ninth non-limiting aspect, that can be combined with the sixth and/or seventh and/or eighth aspect, the manoeuvre element (15) can be manoeuvred in an opening direction, in particular opposite to the closing direction, to:
- displace the rod (10) in the minimum insertion position making the rod axially integrally joined to the slider (3) and optionally to
- further displace the rod and the slider integrally joined with respect to the valve body;
wherein the displacement of the rod (10) in the minimum insertion position or the further displacement of the rod and the slider (3) move the valve to the second operative configuration.

According to a tenth non-limiting aspect, that can be combined with the ninth aspect, at the second operative configuration of the valve the abutment portion of the rod (10) acts opposing, in particular in abutment, against an annular relief (3s) defined inside the slider (3).

According to an eleventh non-limiting aspect, that can be combined with any one of aspects 6-10, the rod (10) traverses an upper through opening (3f) laying on a second end of the slider (3) opposite to the first end of the slider (3).

According to a twelfth non-limiting aspect, that can be combined with any one of aspects 5-11, the control member comprises a castle (25) for guiding the rod (10), rotatably constrained with respect to the valve body (1) and axially integrally joined to said rod (10), optionally at a buttonhole (25a) present on a bottom wall of the castle (25); the castle (25) comprising a plurality of arms (27) axially extending from the upper wall of the castle (25) and engaged to the valve body (1) so that to a rotation of the castle with respect to the valve body there a corresponds an axial displacement of the castle (25) and thus the rod (10) with respect to the valve body (1);

According to a thirteenth non-limiting aspect, that can be combined with the twelfth aspect, the arms (27) extend along a direction substantially parallel to the pre-defined sliding axis (X) and the engagement between the arms (27) and the valve body (1) is optionally of the threaded type.

According to a fourteenth non-limiting aspect, that can be combined with the twelfth and/or thirteenth aspect:
- the manoeuvre element (15) comprises a plurality of arms (26), in particular in a number equivalent to the number of arms (27) of the castle (25),
- the castle (25), identifies angular sectors (27s) for separation between the arms (27) thereof; and wherein
- each arm of the plurality of arms (26) of the manoeuvre element (15) is introduced into a respective angular sector (27s) present between the adjacent arms (27) of the castle (25).

According to a fifteenth non-limiting aspect, that can be combined with the ninth and fourteenth aspect, the manoeuvre element (15) is mounted axially fixed with respect to the valve body (1), and in the manoeuvre in the closing direction or in the opening direction, it causes a per se relative translation of the castle (25).

According to a sixteenth non-limiting aspect, that can be combined with any one of aspects 7-15, the fluid intercepting element comprises a gasket (22) carried at the end part by the intercepting element, in particular at the first end of the slider (3); in the third operative configuration the gasket (22) is configured to act opposing, in particular in abutment, the valve body (1) to define the complete closure of the through-flow between the inlet (1i) and the outlet (1u) of the valve.

According to a seventeenth non-limiting aspect, that can be combined with any one of aspects 4-16, the valve further comprises an opposing spring (17) operatively interposed between the slider (3) and the rod (10) and configured to exert, at least in the first operative configuration of the valve, a force opposing the relative axial displacement between the slider (3) and the rod (10) which tends to remove the rod from the slider (3).

According to an eighteenth non-limiting aspect, that can be combined with the seventeenth aspect, the slider (3) and the opposing spring (17) are entirely contained in the valve body (1) and wherein the relative displacement of the rod with respect to the slider in the plurality of intermediate positions between the minimum insertion position and the maximum insertion position determines a regulation of an elastic opposing action exerted on the slider (3) by the spring.

According to a nineteenth non-limiting aspect, that can be combined with any one of aspects 4-18, the opposing spring (17) comprises a first end arranged in abutment against an abutment integrally joined with the rod (10).

According to a twentieth non-limiting aspect, the rod (10) comprises an end collar (10c) of the rod (10) and a second end opposing an abutment integrally joined with the slider (3)

According to a twenty-first aspect, that can be combined with the nineteenth aspect and/or twentieth aspect, the second end of the slider comprises a wall of the slider (3) delimiting an upper through opening (3f) and extending obliquely with respect to the predefined sliding axis (X).

According to a twenty-second aspect, that can be combined with one or more of the preceding aspects 5-21, in the first, second and third operative configuration of the valve, the manoeuvre element (15) is connected to the valve body (1), and it is configured to determine the axial sliding of the rod (10) with respect to the valve body (1) along the pre-defined sliding axis (X) following the rotation of the manoeuvre element with respect to the valve body (1).

According to a twenty-third non-limiting aspect, that can be combined with one or more of the preceding aspects, the sealing element (9) is an annular membrane surrounding a portion of the fluid intercepting element (3, 5, 22), wherein the membrane is constrained to the valve body (1) at an outer perimeter thereof and to the fluid intercepting element at an inner perimeter thereof.

According to a twenty-fourth non-limiting aspect, that can be combined with one or more of the preceding aspects, the first position for the fluid intercepting element (3, 5, 22) is an end-stop position in which the through-flow opening has maximum width.

According to a twenty-fifth non-limiting aspect, that can be combined with one or more of the preceding aspects, the valve further comprises a lower slider (6) axially engaged to an end of the fluid intercepting element and movable with respect to the fluid intercepting element (3, 5, 22) between a first end-stop position, in which such lower slider has a minimum or null axial projection with respect to the end of the intercepting element, and a second end-stop position, in which the lower slider (6) has a maximum axial projection with respect to the end of the fluid intercepting element.

According to a twenty-sixth non-limiting aspect, that can be combined with the preceding twenty-fifth aspect, the lower slider (6) is configured to be displaced from the second towards the first end-stop position due to a displacement of the fluid intercepting element (3, 5, 22) with respect to the valve body (1) along the predefined sliding axis (X) which moves the lower slider (6) to contact with the valve body (1).

According to a twenty-seventh non-limiting aspect, that can be combined with the twenty-fifth and/or twenty-sixth aspect, the valve comprises a spring (23) interposed between the end of the fluid intercepting element and the lower slider (6); the spring (23) being configured to exert an axial mutual moving apart force between the lower slider (6) and the fluid intercepting element (3, 5, 22) such to constantly push the lower slider (6) towards the second end-stop position.

According to a twenty-eighth non-limiting aspect, that can be combined with the sixteenth aspect, combined with the twenty-fourth, twenty-fifth and/or twenty-sixth aspect, the lower slider (6) surrounds the gasket (22) and it has an axial extension along the predefined sliding axis (X) that is greater than the axial extension of the gasket (22) along the predefined sliding axis (X).

According to a twenty-ninth non-limiting aspect, that can be combined with the preceding fourth aspect and further aspects depending thereon, the fluid intercepting element (3, 5, 22) is oriented in the axial direction with a direction locally taken by the fluid flowing through the inlet (1i) of the valve, and wherein the second closing direction is contrary with respect to the direction locally in use taken by the flow.

According to a thirtieth non-limiting aspect, that can be combined with one or more of the preceding aspects, the sealing element (9) faces, on a first side, directly on the channel and on a second side opposite to the first, directly on the auxiliary chamber (18c), and wherein the sealing element is contained in a portion (8) of the valve body surrounding at least part of the fluid intercepting element (3, 5, 22) and having at least one wall which is oriented in the direction substantially parallel to the predefined sliding axis (X).

According to a thirty-first aspect, a further object of the invention is to provide a hydraulic installation (200), comprising a delivery conduit (202) supplying a pre-set number of appliances, and a return conduit (203) configured to receive a fluid flowing out from the appliances, the hydraulic installation (200) further comprising a valve (100) according to any one of the preceding aspects installed on the return conduit (203) with the control inlet (18) connected to the delivery conduit (202).

According to a thirty-second non-limiting aspect, depending on the preceding thirtieth aspect, the pre-set number of appliances is a pre-set number of heat exchangers.

According to a thirty-third non-limiting aspect, another object of the present invention is a method for controlling a hydraulic installation (200) according to the thirty-first and/or thirty-second aspect, wherein the method comprises:
- a step of installing a valve (100) according to any one of the preceding aspects 1-30 at a return conduit (203) of the hydraulic system (200), so that the inlet (1i) of the valve (100) is connected - upstream - to the return conduit (203) and so that the outlet (1u) of the valve (100) is connected - downstream - to the return conduit (203) and so that the control inlet (18) is connected to the delivery conduit (202);
- at least one step for adjusting the valve (100) by means of an action on the manoeuvre element (15) to configure the valve (100) in the first operative configuration in which - by varying the fluid through-flow opening between the inlet (1i) and the outlet (1u) as a function of the positions taken by the intercepting element (3, 5, 22) relatively to the valve body (1) - a pressure differential between the pressure (P+) present in the auxiliary chamber (18c) and the pressure (P-) present in the channel is kept at a pre-defined value irrespective of the flow of the fluid traversing the return conduit (203).

According to a thirty-fourth non-limiting aspect, that can be combined with the preceding thirty-third aspect, in the aforementioned method the step for adjusting the valve (100) by means of an action on the manoeuvre element (15) configures the valve (100) in the second operative configuration alternative to the first operative configuration in which the fluid through-flow opening between the inlet (1i) and the outlet (1u) is maintained in a condition of predefined width irrespective of the pressure differential between the pressure (P+) present in the auxiliary chamber (18c) and the pressure (P-) present in the channel.

According to a thirty-fifth non-limiting aspect, that can be combined with the thirty-third or thirty-fourth aspect, the step for adjusting the valve (100) by means of an action on the manoeuvre element (15) configures the valve (100) in the third operative configuration alternative to the first operative configuration or alternative to the second operative configuration in which the fluid through-flow opening between the inlet (1i) and the outlet (1u) is maintained in a full closing condition irrespective of the value taken by the pressure differential between the pressure (P+) present in the auxiliary chamber (18c) and the pressure (P-) present in the channel.

According to a thirty-sixth non-limiting aspect, that can be combined with one or more of the preceding aspects 33-35, the method comprises a step for varying the predefined pressure differential value between the pressure (P+) present in the auxiliary chamber (18c) and the pressure (P-) present in the channel by varying the position taken by the manoeuvre element (15) with respect to the valve body (1).

According to a thirty-seventh non-limiting aspect, that can be combined with one or more of the preceding aspects 33-36, the actuation of the manoeuvre element (15) to determine passing from the first operative configuration to the third operative configuration causes a reduction of the predefined pressure differential value.

### Description of the figures

These and other characteristics of the invention will be further described with reference to one or more preferred and non-limiting embodiments, to which the following description portion refers to and with reference to the attached figures, wherein:
- figure 1 illustrates a perspective view of the valve subject of the invention;
- figure 2 illustrates a partial sectional view of the valve of figure 1, in a first operative configuration in which a first pressure differential is defined;
- figures 3 and 4 illustrate detailed views of figure 2,
- figure 5 illustrates a partial exploded view of the valve of figure 1;
- figure 6 illustrates a partially sectioned perspective view of the valve of figure 1;
- figure 7 illustrates a partial sectional view of the valve of figure 1, in a first operative configuration in which a second pressure differential is defined;
- figure 8 and figure 9 illustrate detailed views of figure 7,
- figure 10 illustrates a partial sectional view of the valve of figure 1, in a second operative configuration;
- figure 11 illustrates a detailed view of figure 10;
- figure 12 illustrates a partial sectional view of the valve of figure 1, in a third operative configuration;
- figure 13 and figure 14 illustrate detailed views of figure 12,
- figure 15 illustrates a base scheme of an installation on which the valve subject of the invention is installed.

### Detailed description of the invention

A differential pressure regulation valve is indicated in its entirety with the reference number 100.

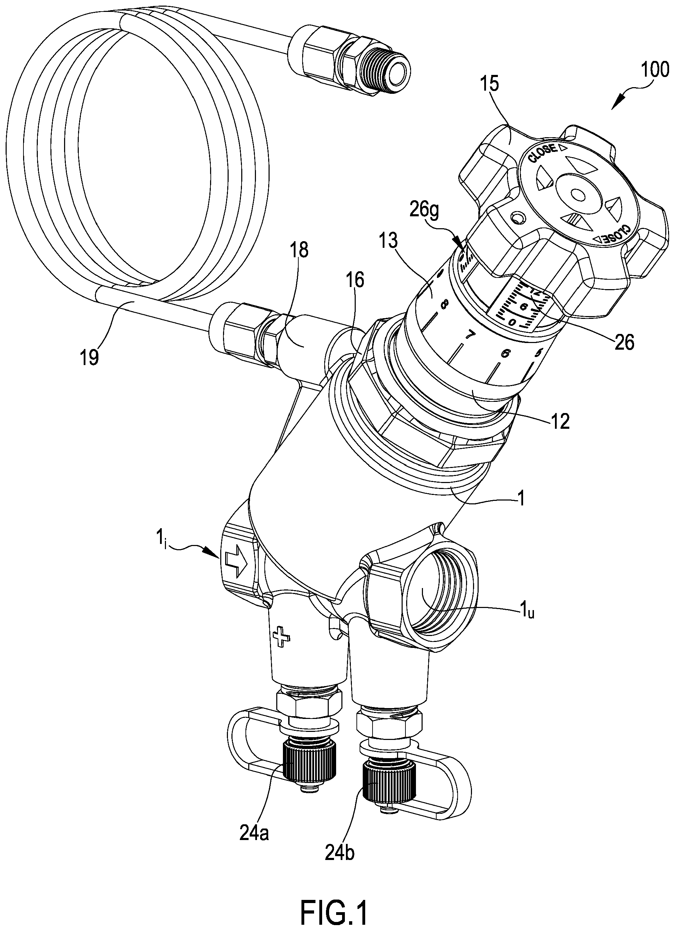

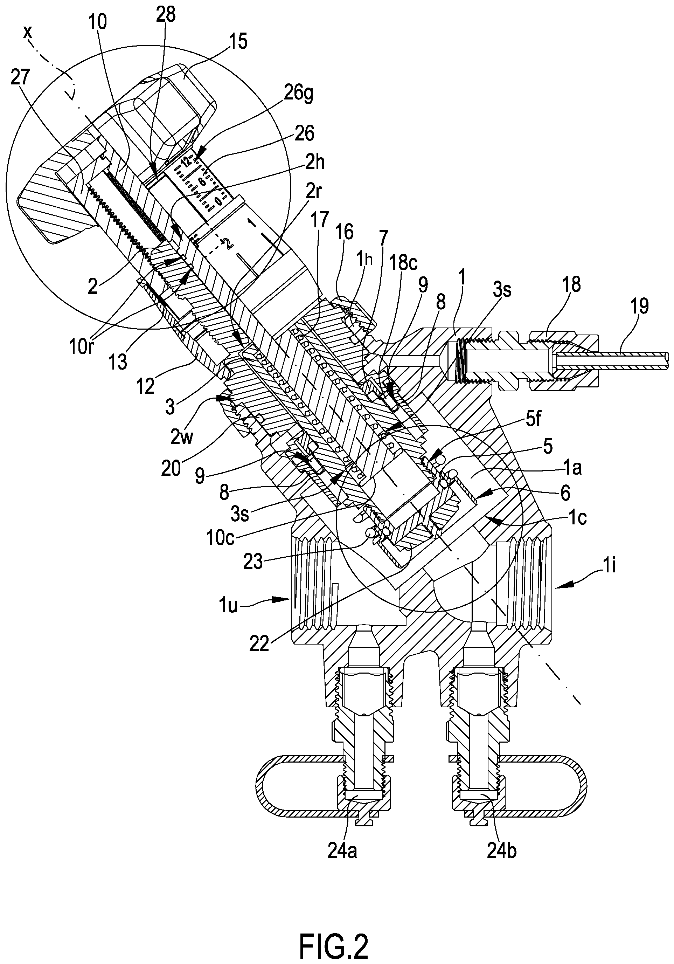

As illustrated in figure 1 and in figure 2, the valve 100 comprises a valve body 1, for example made of metal and even more preferably made of brass or an alloy thereof, having a lower portion with an inlet 1i, an outlet 1u and a cavity 1a which defines a channel, for example with variable width, between the inlet 1i and the outlet 1u through which a fluid, preferably but not limitedly water, flows along a predefined flowing direction. Such predefined flowing direction goes from the inlet 1i towards the outlet 1u.

The valve body 1 further comprises an upper element 2, also typically made of metal, that can be disassembled with respect to the lower portion of the valve body 1; such upper element 2 has a substantially cylindrical-shaped portion partly introduced into the lower portion of the valve body 1 and provided with an abutment ring which- when the upper element 2 is installed on the valve body 1, enters into abutment with a wall 1h opposing the lower portion of the valve body 1 which is externally provided with a coupling surface for example of the threaded type. The sealing between the portion of the upper element 2 that is introduced into the rest of the valve body 1 and the lower portion of the valve body is obtained by means of a gasket, preferably but not limitedly an O-ring 20, lying in an annular recess of the upper element 2.

Internally, the upper element 2 has a through hole 2h, which identifies an axis indicated in the reference figures with letter X. Such axis is defined in the following description as a predefined sliding axis, given that the operatively movable parts of the valve 100, which will be described in detail in the following text portion, slide right along this axis.

Externally, the upper element 2 has a portion, for example at least partly threaded 2f, suitable to be engaged with a control member better described in the subsequent description portion. In particular, the hole 2h has a first section with smaller diameter and a second portion with larger diameter, separated from each other by an abutment wall 2r, which is preferably but not limitedly oriented in an orthogonal direction with respect to the axis X.

The valve 100 further comprises a ring 16 for locking the upper element 2 against the valve body 1; such ring 16 is internally substantially cylindrical-shaped with a wall whose inner face is for example at least partly threaded, to be coupled in use on the outer thread of the upper cylindrical wall 1h of the valve body 1; the diameter of the hole identified on the ring 16 is such to enable a portion of the upper element 2 to pass through. The ring 16 also has a wall that is obliquely oriented with respect to the lateral wall, for example consisting of a lip emerging orthogonally with respect to the lateral wall of the ring 16, which is engaged on an abutment wall 2w of the upper element 2; due to the screwing of the ring 16 on the valve body 1, the upper element 2 is held between the ring 16 and the valve body 1. The ring 16 is conveniently provided with a polygonal-shaped manoeuvre element, for example octagonal-shaped, which enables it to be tightened by means of a special tool such as a wrench, equivalently replaceable for example and not limitedly by a knurling.

The valve 100 further comprises flow intercepting element 3, 5, 22 which is axially movable along the axis X. Such flow intercepting element, which is enclosed between the valve body 1 and the upper element 2, is at least partly operating in the channel, and it is movable so as to be able to reduce or vary the opening width of the channel which places the inlet 1i in communication with the outlet 1u.

The fluid intercepting element 3, 5, 22 is axially movable along a first predefined displacement direction, identified by the axis X, between a first end-stop position and a second end-stop position between which it varies the opening width of the channel. More in particular, as the fluid intercepting element is progressively displaced axially from the first end-stop position to the second end-stop position, the width of the channel is progressively reduced, until the channel is fully occluded. The first end-stop position for the fluid intercepting element 3, 5, 22 is defined by the substantial mechanical opposition that the latter has with the upper element 2. The fluid intercepting element 3, 5, 22 ends up in abutment against the opposing wall 2r present between the first and the second section of the hole 2h.

The fluid intercepting element comprises a slider 3 which is - as concerns a first part thereof - introduced into the channel and - as concerns a second part thereof - projects into the auxiliary chamber 18c; preferably but not limitedly, such slider 3 is made of metal material, such as for example brass or an alloy thereof, or made of plastic, or any other material capable of offering sufficient robustness and resistance against corrosive phenomena of the fluid, typically water, which flows in the installations on which the valve 100 is designated to be installed.

In a non-limiting manner, the slider 3 comprises a hollow body which extends for a maximum extension direction thereof in the direction parallel to the axis X and in particular having an axis substantially coinciding with the axis X. The hollow body 3 of the slider preferably but non-limitedly defines a cylindrical-shaped inner wall.

At the first end thereof, such slider 3 is obliquely provided with an annular wall and more precisely orthogonally oriented with respect to the axis X on which a through opening 3f is obtained. Joined to the annular wall is the previously mentioned inner wall, which extends for a maximum extension direction thereof, axially to the axis X. Such inner wall has an annular relief 3s at an intermediate height thereof. The annular relief 3s determines a first lateral wall portion in which the inner face defines a circular cavity of a first and smaller diameter, and a second lateral wall portion in which the inner face defines a circular cavity of a second and larger diameter. The second portion is the one that is joined with the second end of the slider 3, at which - on the outer surface - a thread for the coupling is for example present, e.g. of the removable type with a body 5 housing a gasket 22.

In particular, such body 5 may have an annular support 22, which - in a first upper end thereof - is coupled on the slider 3 by screwing, and which has a bottom wall on which the gasket 22 is positioned. Preferably, from such bottom wall there departs a pin 5p for holding the gasket 22. Thanks to the holding pin 5p, the gasket 22 may be installed on the annular support 5 by means of an opposing insertion, and easily removed therefrom by overcoming the aforementioned opposition, without using tools, thus facilitating ordinary maintenance upon wear.

The valve 100 further comprises a sealing element 9, which - in use - is interposed between the lower portion of the valve body 1 and the upper element 2 and which - when installed in this position - separates the channel from an auxiliary chamber 18c in which a fluid is present at a given pressure value P+ during use. The chamber 18c is in communication with a control inlet 18, separated with respect to the inlet 1i and the outlet 1u, and it is defined between the portion of the fluid intercepting element not operating in the channel, part of the valve body 1 and part of the upper element 2. The auxiliary chamber 18c has a variable dimension depending on the position that the fluid intercepting element takes with respect to the valve body 1 and the upper element 2. In particular, the auxiliary chamber 18c has a dimension that increases upon the reduction of the opening in the channel due to the displacement of the intercepting element.

The sealing element 9 is radially interposed between the fluid intercepting element and the valve body 1, so as to separate the fluid through-flow conduit from the auxiliary chamber. Preferably but not limitedly, the sealing element 9 is a substantially annular-shaped gasket, with a downwards-facing U-shaped section, which defines an outer perimeter integrally joined to the valve body 1 and an internal perimeter which is integrally joined to the slider 3. In the specific non-limiting embodiment described herein, the sealing element 9 has an outer wall of said U-shaped section which is held by a containment body 8. The containment body 8 is substantially a tubular element, with diameter sufficient to house the slider 3 and the U-shaped section of the sealing element 9, and it may have an upper portion with curved wall introduced into an annular relief of the valve body 1. The containment body 8 comprises a lateral wall coupled to the valve body 2 so as to always leave a gap for the through-flow of the fluid towards the sealing element. Due to this configuration, the pressure present in the channel during use may be detected through the sealing element 9 on a very large surface and uniformly on the entire perimeter of the sealing element 9. Furthermore, the presence of several slots ensures that whenever an impurity deposits at a slot, the "reading" of the correct pressure differential by the sealing element 9 is maintained, thus contributing towards increasing the reliability of the valve. The annular support 5 has a lower slider 6, with a pressure balancing function, substantially ringshaped, axially movable with respect to said slider 3 between a first end-stop position in which it has a minimum axial extension with respect to the slider 3 and a second end-stop position in which it has maximum axial extension with respect to the slider 3. The diameter of the lower slider 6 is larger than the diameter of the gasket 22, and such gasket is advantageously contained therein in the shape. In particular, present on the annular support is a secondary spring 23, having a first end opposing against a ring of the second portion of the slider 3 and a second end abutting against a wall of the aforementioned lower slider 6 extending obliquely, and preferably orthogonally, with respect to the direction identified by the axis X. The secondary spring 23 tends to take the lower slider 6 to a maximum axial distance with respect to the second end of the slider 3. In particular, this enables the second end-stop position for the lower slider 6 to be an inoperative position, altered when the slower slider 6, due to the sliding of said fluid intercepting element 3, 5, 22 with respect to the valve body 1 along the axis X, at the gasket thereof 22, comes into contact with the body 1 of the valve 100. As regards the lower slider 6, there are a plurality of non-permanent alternative solutions with respect to the second end-stop position, which are maintained due to the forcing of the lower slider 6 against the body 1 of the valve 100 during the closing of the channel, with the aim of initially approaching and the bringing the gasket 22 into contact against the body 1 of the valve.

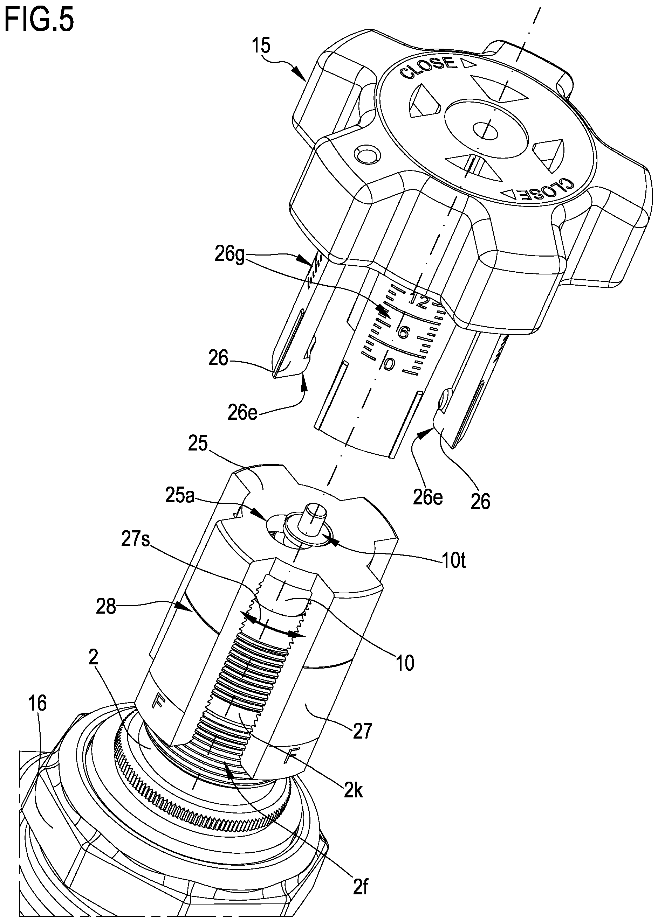

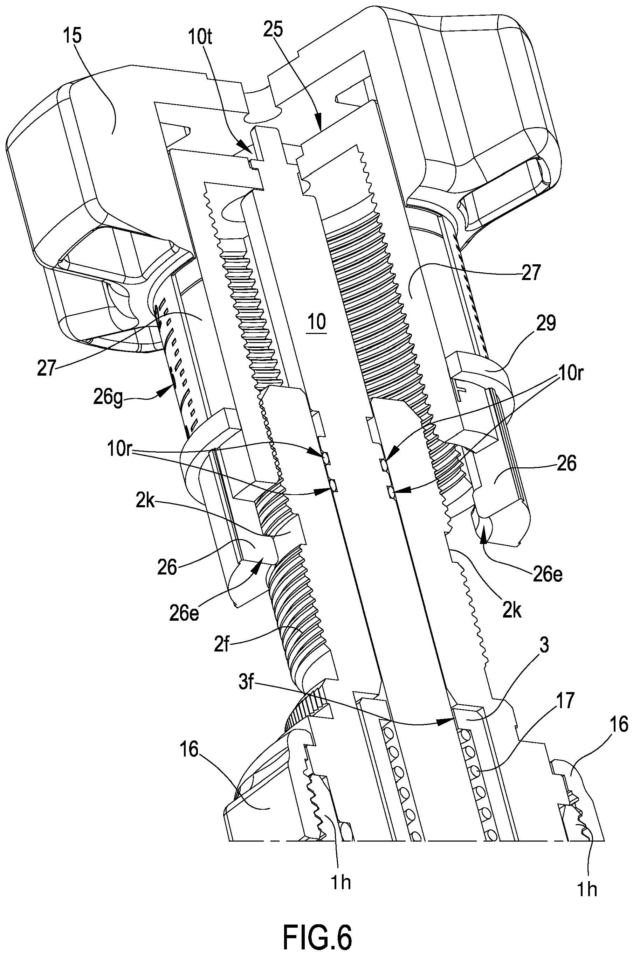

As illustrated in particular in figures 5 and 6, the control member 10, 10c, 15, 25, 26 of the valve 100 comprises:
- a rod 10, provided with an abutment ring 10t for the axial constraint on a rod-guide castle,
- a rod-guide castle 25, axially integrally joined to the rod 10,
- a manoeuvre element 15, provided with arms 26 for engagement on the rod-guide castle 25.

In particular, the castle 25 has an upper wall substantially orthogonal with respect to the axis X from which four arms 27 depart, oriented substantially parallel to the axis X. The arms 27, in the embodiment represented in the attached figures, are 4, but such number shall not be deemed to be limiting. Each of the arms 27 has an inner face, for example at least partly threaded, in particular having a thread susceptible to be coupled on the threaded portion 2f of the upper element 2. Any other coupling capable of enabling to couple the castle 25 onto the valve body, so that a relative translation between the two bodies occurs as a result of a relative rotation between the two around the axis, can obviously alternatively used too.

Two angularly adjacent arms 27 identify a hollow angular sector 27s. On the upper wall of the castle 25, a loop 25a is present on which the abutment ring 10t of the rod 10 is inserted; such castle 25 is engaged on the threaded portion 2f of the upper element 2 given that it can rotate and in particular considering that it can be screwed and unscrewed on the latter. The rotation of the castle 25 with respect to the upper element 2 determines an axial sliding of the castle 25 with respect to the upper element 2, wherein the castle 25 drives the rod 10 too axially sliding along the axis X. The abutment ring 10t, when engaged on the loop 25a determines the possibility of relative rotation between the castle 25 and the rod 10; thus, though being slidingly driven along the axis X, the latter preferably does not rotate around the latter axis.

The manoeuvre element 15 is mounted axially fixed with respect to the valve body, and in the manoeuvre in the closing direction or in the opening direction, it causes a per se relative translation of the castle 25. In detail, the rotation of the castle 25 is enabled by the arms 26 of the manoeuvre element 15, which are fixed with respect to the latter and have an end 26e, in particular the one not directly joined with the manoeuvre element 15, having a tooth engaged in a recess 2k of the upper element 2. The arms of the manoeuvre element 15 have a shape complementary to the hollow angular sector 27s, given that they can be each introduced between two arms 27 of the castle 25 during use.

Each of the arms 26 of the manoeuvre element 15 has a graduated scale 26g with respect to which a notch 28 present on at least one and preferably all arms 27 of the castle 25 shows the relative axial sliding and, thus, represents the index of insertion of the rod 10 into the slider 3.

The manoeuvre element 15 is held in the seat by a collar 12, 13, resting on the upper element 2, similarly to the arms 27 of the manoeuvre element 15; a ring 29, positioned at an intermediate height on the length of the arms 27, helps to reduce the radial divergence which would otherwise occur upon applying the rotational torque of the manoeuvre element 15. Such ring is particularly convenient when the manoeuvre element 15 similarly to the arms 26 thereof, are made of plastic, given that the relative flexibility thereof is preferably limited.

Optionally present on the collar 12, 13 is a further graduated scale 13g (which provides rotation fractions), which enables to read the fine adjustment of the pressure differential value which is pre-set by means of the manoeuvre element 15. As a matter of fact, particularly when the thread 2f has a very small pitch, numerous rotations of the manoeuvre element 15 are possible, and the notch 28 could even require half or more rotations of the manoeuvre element 15, so as to visibly move on the graduated scale 26g. The graduated scale 26g may for example be provided with a plurality of indices whose mutual distance corresponds to a rotation of the manoeuvre element 15. Thus, a reading of the predefined pressure differential may be advantageously read both due to the linear translation of the notch 28 with respect to the graduated scale 26g as well as due to the angular rotation of the manoeuvre element 15 with respect to the collar 12, 13 or at least one portion thereof. In particular, in a preferred but non-limiting embodiment of the invention, the collar 12, 13 comprises a first and a second portion mutually aligned on the axis X, wherein the second portion 13, which is the one on which the further graduated scale is present, rotates integrally joined with the castle 25 with respect to the first rotation 12.

The rotation of the manoeuvre element 15 with respect to the upper element 2 simultaneously determines the driving of the castle 25 in rotation and, due to the thread on which it is engaged and due to the fact that the manoeuvre element 15 is hindered from translating along the axis X, there occurs the translation along the axis X of the manoeuvre element 25 with respect to the manoeuvre element itself. Such translation also determines a lowering or lifting of the notch 28 with respect to the graduated scale 26g, due to which it is possible to determine the pressure differential value at which the valve acts. In particular, the attached figures show a solution in which the graduated scale shows quality values between 0 and 12; the graduated scale could otherwise show a quantitative pressure value.

The rod 10, extending along the axis X and axially integrally joined to the manoeuvre castle 25, is at least partly introduced into the upper element 2, in particular into the hole 2h and subsequently at least partly into the slider 3, and it can be moved with respect to the slider 3 at least between the following relative positions: a position of minimum insertion into the slider 3; a position of maximum insertion into the slider 3, and a plurality of intermediate positions between the minimum and maximum insertion position.

At an opposite lower end thereof with respect to the upper end, the rod 10 comprises a collar 10c which is introduced into the second lateral wall portion of the slider 3. The rod 10 may slide axially with respect to the slider 3, but the travel thereof relatively to the latter is at least delimited by the annular relief 3s. In particular, such limitation derives at least from the fact that the collar 10c has a diameter such to interfere with the annular relief 3s. Progressing towards the minimum insertion position, when the collar 10c comes into contact with the annular relief 3s, the slider 3 is driven axially by the rod 10, in particular towards the upper element 2 up to making it reach the first end-stop position, corresponding to the minimum insertion position in which the rod blocks the sliding of the slider 3 with respect to the valve body 1.

At the portion introduced into the hole 2h of the upper element 2, the rod 10 comprises a pair of sealing rings 10r. Preferably but not limitedly, given that the rod 10 - during the sliding thereof along the axis X - does not rotate with respect to the latter, each of the sealing rings 10r is subjected to sliding friction force along the wall of the hole 2h in a direction substantially parallel to the axis X during use. The Applicant observed that providing for that the rod 10 does not to rotate with respect to the axis X during the translation thereof enables reducing the wear of the sealing rings 10r, given that the sliding friction along the direction substantially parallel to the axis X is not summed to a sliding friction in a direction substantially orthogonal thereto, which would otherwise arise from a rotation thereof.

Progressing towards the position of maximum insertion of the rod 10 into the slider 3, when the collar 10c comes into contact with the bottom of the slider 3 (defined in the example illustrated by the body 5), then the rod 10 and the slider 3 are axially integrally joined and thus, following a further axial movement of the rod 10, the slider 3 is axially driven by the rod 10 up to making it reach the second end-stop position in which the gasket 22 closes the flow of the fluid through the conduit. In this condition, the rod blocks the sliding of the slider 3 with respect to the valve body 1.

In a preferred but non-limiting embodiment, the valve 100 further comprises an opposing spring 17 operatively imposed between the slider 3 and the rod 10 which determines the set pressure change value; in particular, the spring is introduced into the slider 3 and surrounds part of the rod 10 and it is held at the two respectively opposite ends thereof: on the slider 3, by an oblique wall and more precisely orthogonal to the axis X, which more precisely lies at the upper end thereof and, on the rod 10, above the collar 10c. With this construction, the opposing spring 17 is configured to exert an elastic force or action opposing the relative axial displacement between the slider and the rod 10 which tends to remove the rod 10 from the slider 3. The force opposing the relative axial displacement between the slider and the rod 10 increases proportionally to the increase of the removal of the rod 10 from the slider 3.

Present at the inlet 1i and respectively the outlet 1u, are pressure reading ports 24a, 24b, which enable detecting the pressure of the fluid in use circulating in the channel, upstream and downstream of the fluid intercepting element. The ports 24a and 24b enable verifying the pressure difference at the ends of the valve. Furthermore, the reading of the pressure on the port 24b (i.e. P-) enables verifying (knowing the pressure P+) whether the pressure difference value set on the valve 100 (P+ minus P-) was actually achieved.

The valve subject of the invention can be configured in a plurality of operative configurations, and in particular:
- a first operative configuration, or standard operative configuration in which the variation of the opening width of the channel which places the inlet 1i in communication with the outlet 1u is determined according to the pressure differential, and in particular according to the pressure differential value between the pressure P- present in the channel and the pressure P+ to which the fluid present in the auxiliary chamber 18c is subjected during use;
- a second operative configuration, in which the fluid intercepting element 3, 5, 22 is blocked by means of the control element 15 in a first end-stop position defining a pre-set width in said through-flow opening irrespective of the value taken by said pressure differential;
- a third operative configuration, said fluid intercepting element 3, 5, 22 is blocked by means of the control element 15 in a second end-stop position defining the complete closure of the through-flow between the inlet 1i and the outlet 1u of the valve irrespective of the value taken by said pressure differential.

Should the user act on the control element 15, the latter enables passing from the first operative configuration to the second operative configuration or from the first operative configuration to the third operative configuration, continuously and without using external devices for blocking the fluid intercepting element as well as without requiring to disassemble the control element 15 or the relative portions thereof.

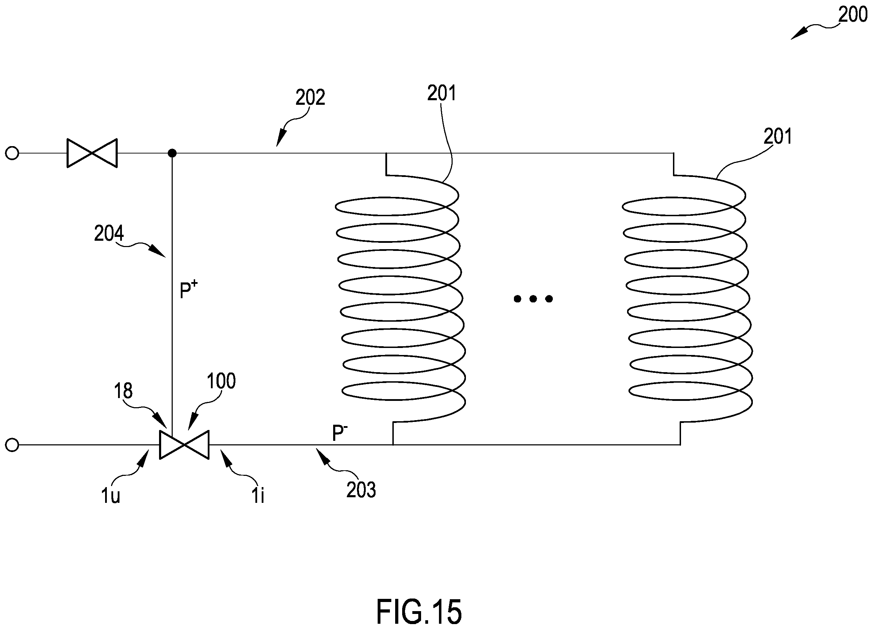

As illustrated in figure 15, the valve is typically installed in a hydraulic installation 200 which comprises:
- a delivery conduit 202 which supplies a pre-set number of appliances 201; and
- a return conduit 203 configured to receive the fluid flowing out from at least part of the appliances 201.

Figure 15 shows a plurality of appliances 201 in the non-limiting embodiment of a heat exchanger, which in particular can be a heater. The use of the valve 100 in a hydraulic installation 200 enables the possibility of regulating a temperature in a heated room. The flow in the hydraulic installation 200 it will be constantly modulated should the thermal load change.

The valve 100 is installed in the return conduit 203 so that the inlet 1i thereof is connected upstream and the outlet 1u thereof is connected downstream of the return conduit. The control inlet 18 is connected with the delivery conduit 202, and it receives a fluid at a first pressure P+ therefrom.

The Applicant observed that installing the valve 100 on the return conduit, in particular when the hydraulic installation 200 is a heating installation, enables reducing the noise that at times arises during the operation of the thermostatic valves, in particular with strong reduction of flow and ensuing increase of the differential pressure which can determine cavitation phenomena.

Under normal conditions, the user 201 determines a pressure drop between the delivery conduit 202 and the return conduit 203, so that the delivery conduit 202 is at a first greater pressure P+ with respect to the second pressure P- at which the return conduit 203 is found.

In particular, the control element 15 enables to vary the pressure differential that the valve is required to maintain by means of a reduction of the width of the channel between the inlet 1i and the outlet 1u. According to the present invention, the pressure differential, exclusive of the load drops along the conduits - considered equivalent to zero for the sake of ease of treatise - is obtained from the difference between the first pressure P+ present in the delivery conduit 202 and thus in the control inlet 18 of the valve and in the auxiliary chamber 18c, and the second pressure P- which is present in the return conduit 203 in particular at the channel of the valve.

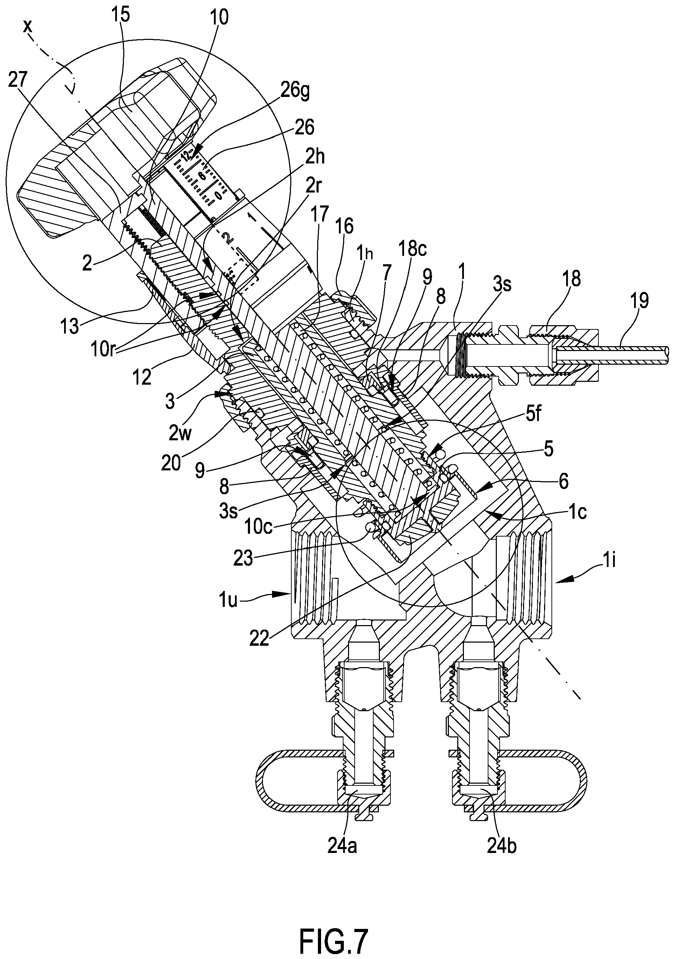

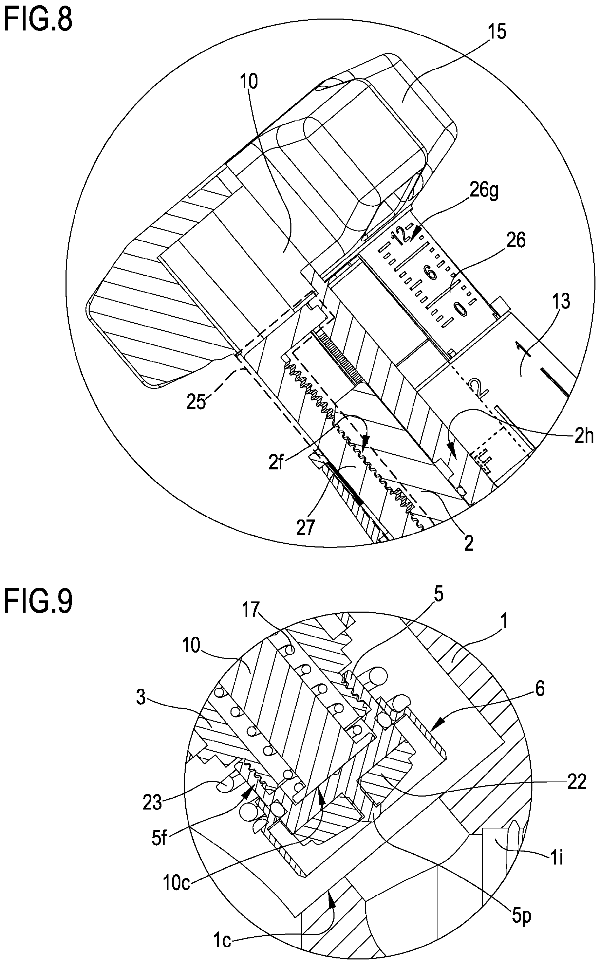

Figures 2-4 and 7-9 show two conditions of the valve 100 in said first operative configuration; in particular figures 2-4 show a condition in which in which the operating pressure differential of the valve is at maximum, while figures 7-9 show a condition in which the operating pressure differential of the valve is minimum. In the specific embodiment of the valve 100 illustrated in the attached figures, the "12" reference level on the graduated scale 26g corresponds to a first pressure differential for example equivalent to 30kPa, while the "0" reference level on the graduated scale 26g corresponds to a second pressure differential for example equivalent to 5kPa. Such pressure values are strictly for exemplification purposes, and thus shall not be deemed to be limiting.

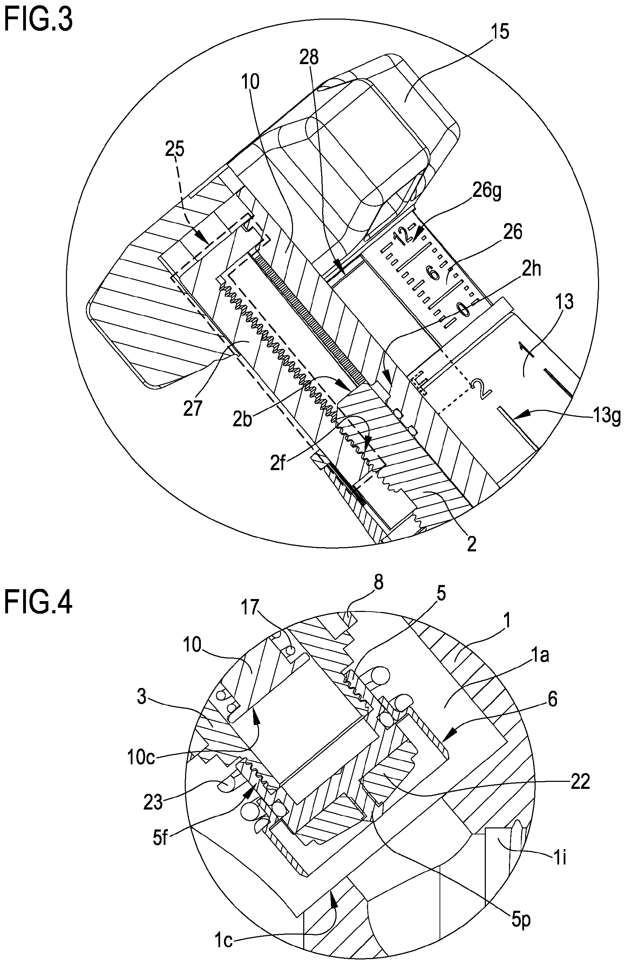

As illustrated in figure 3, at the "12" reference level indicated by the notch 28, the rod 10 is in an intermediate removal condition with respect to the slider 3 and it compresses the opposing spring 17. In an inoperative condition, which occurs when the pressure differential is lesser than a value - 30kPa in this specific case - predefined by means of the manoeuvre element 15, the slider 3 abuts against the upper element 2 and the auxiliary chamber 18c has minimum dimensions. The first pressure P+ of the fluid in the auxiliary chamber 18c, in order to displace the flow intercepting element with respect to this inoperative condition thereof, must overcome (besides the effect of the pressure P-) the opposition to the displacement of the slider 3 which is given by the sum of the force exerted by the opposing spring 17 and the elasticity of the sealing element 9, both of which tend to maintain the slider 3 in such inoperative position. If the first pressure P+ increases in the first conduit, the slider 3 is progressively pushed in an axial displacement directed towards the second end-stop position, thus determining the reduction of the width of the channel between the inlet 1i and the outlet 1u of the valve. Such reduction determines the reduction of the flow of the fluid that can circulate in the valve 100, and it thus determines an increase of the second pressure P- in the return conduit 203. The increase of the second pressure P- is equivalently present in the channel, and it is detected by the sealing element 9 maintaining the slider 3 in position different from the inoperative position. Both the first and the second pressure P+, P- will be greater than previously, but the difference thereof will remain constant.

Should the user decide to adjust the manoeuvre element 15 to set a different predefined pressure differential with respect to the previous one, and in particular a lower one, the user must act on the aforementioned manoeuvre element 15, to cause a screwing of the latter on the upper element 2 determining an increase of the portion of the rod 10 introduced into the slider 3. The opposing spring 17 is progressively released and the force exerted thereby reduces progressively as the rod 10 progresses in the slider 3. The "12" reference level indicated by the notch 28 on the graduated scale 26g changes progressively, particularly reducing, according to the screwing of the manoeuvre element 15. Following the reduction of the predefined pressure differential by means of the manoeuvre element 15, there occurs a corresponding release of the spring 17 and thus a reduction of the controlled pressure differential. In other words, the first pressure P+ is sufficient to cause a sliding of the slider 3 with respect to the valve body 1, so as to reduce the opening of the channel to reduce the flow that flows through it, increasing the value of the second pressure P- so that the pressure differential P+, P- is taken to a smaller value with respect to the previous one.

Continuing to screw the manoeuvre element 15 with respect to the upper element 2, enables the rod 10 to achieve the position of maximum insertion into the slider 3. Such position corresponds to a minimum, and preferably not null, pressure differential value P+, P-. Such situation is schematically represented in figures 7-9. In such situation, a pressure P+ that is greater than P- by a pre-set small value (which represents the minimum of the valve adjustment field) is sufficient to cause a displacement of the slider 3 with respect to the valve body 1 to determine a further reduction of the opening present in the channel.

Continuing to screw the manoeuvre element 15 beyond the previously described position, the further axial sliding of the rod 10 with respect to the upper element 2, given that such rod 10 is in a position of maximum insertion into the slider 3 and in particular abutting against the second end of the latter, causes the driving of the slider 3 along the axis X. The driving of the slider 3 determines a progressive approaching of the second end thereof to an opposing wall 1c of the channel. The first element which comes into contact with the aforementioned opposing wall is the lower slider 6.

Given that such lower slider 6 is axially slidable with respect to the slider 3, with a further screwing of the manoeuvre element 15 on the upper element 2, the slider 3 slides axially with respect to the lower slider 6 and the gasket 22 supported therein progressively approaches the opposing wall 1c of the channel even more, determining an extremely progressive closure of the channel, which is completed when the gasket 22 enters into abutment and pushed by the slider 3 against the abutment wall 1c of the channel. This determines the third operative configuration, which is defined as *"shut-off",* given that the fluid intercepting element cannot be displaced given that it is blocked by the opposing wall 1c of the channel in one direction while it is forced by the rod 10 in the other direction. In such second operative configuration, the auxiliary spring 23 is compressed, and the compression thereof will not occur only when unscrewing the manoeuvre element 15 with respect to the upper element 2.

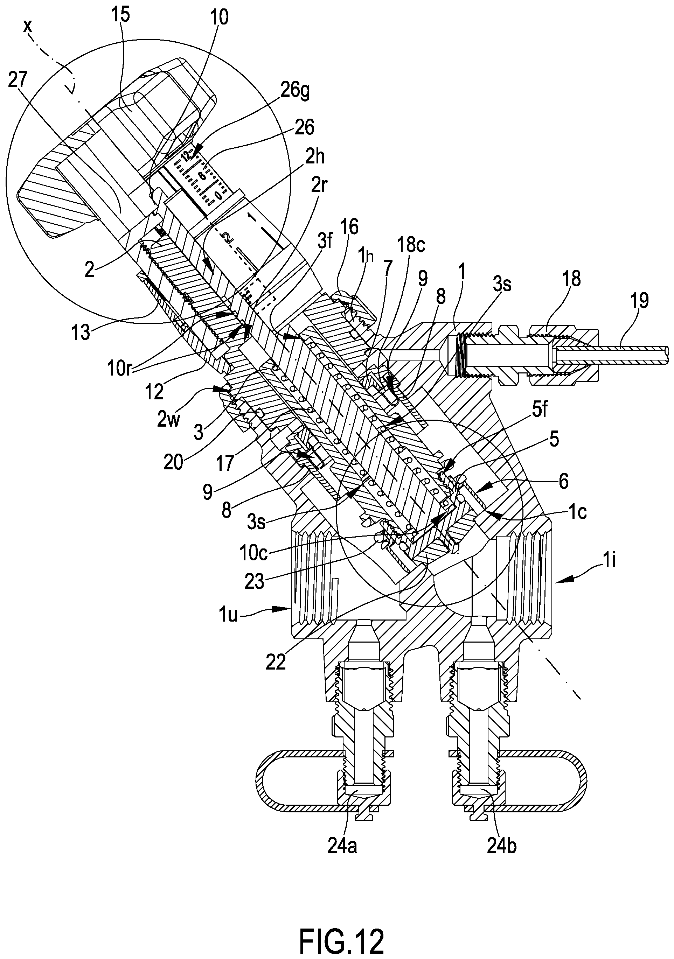

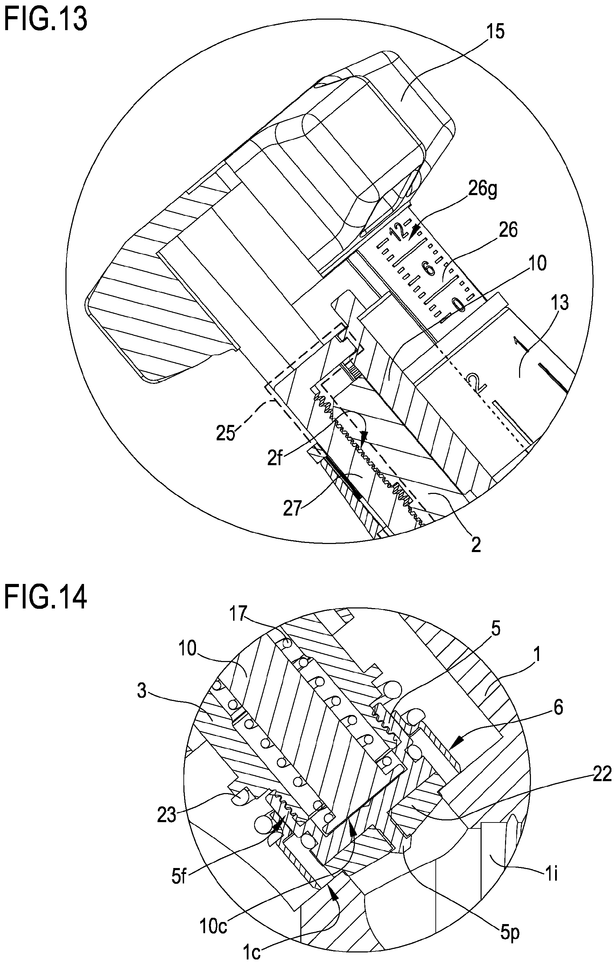

When the valve 100 is in the third operative configuration, in the installation 200 as represented in figures 12-14, the flow of the fluid through the valve 100 is prevented.

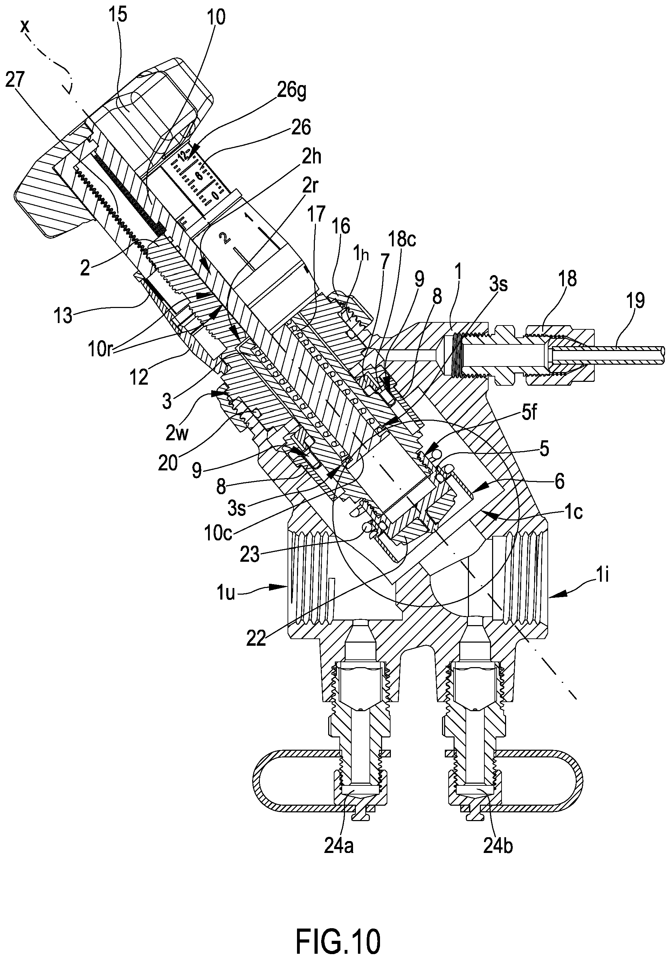

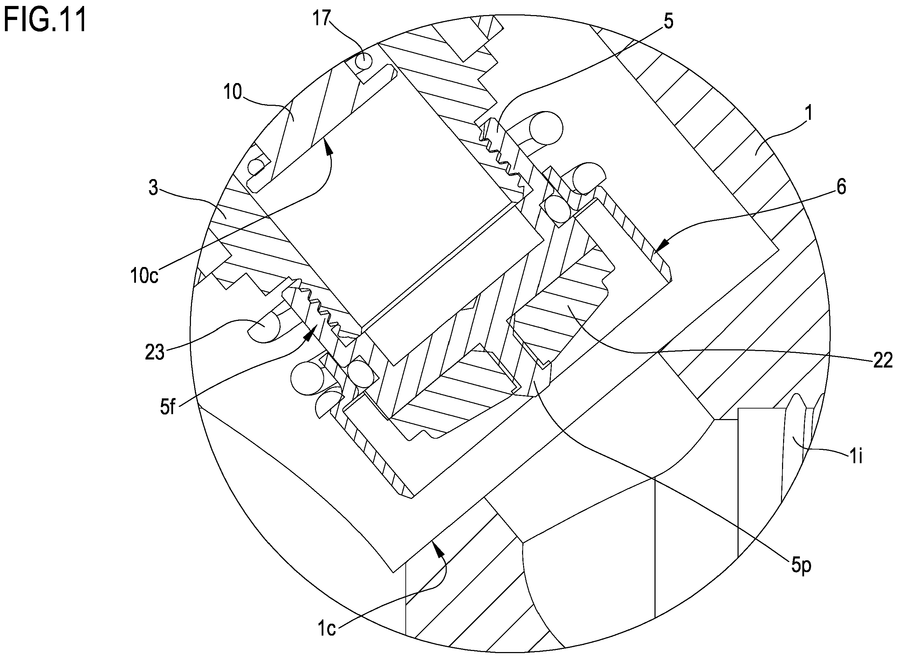

If planning to carry out an operation for washing the conduits of the installation, the user must conveniently use the same manoeuvre element 15 previously used for the first and third operative configuration, to configure the valve in the second operative configuration, represented in figures 10 and 11. Progressively unscrewing the manoeuvre element 15 with respect to the upper element 2, enables reducing the rod portion introduced into the upper element 2 and, at a given point of the travel of the rod 10, also the progressive reduction of the insertion of the rod 10 into the slider 3. The unscrewing of the manoeuvre element 15 with respect to the upper element 2 leads to a progressive compression of the opposing spring 17 and it may lastly take the collar 10c of the rod 10 opposing against the annular relief 3s.

Should the collar 10c of the rod 10 oppose against the annular relief 3s, screwing the manoeuvre element 15 further with respect to the upper element 2 does not cause further compression of the opposing spring 17 but it causes a driving of the slider 3 to abut against the upper element 2. Thus, this determines the second operative configuration, in which the fluid intercepting element is blocked in a first displacement direction thereof by the upper element 2 and in a second displacement direction thereof by the opposition between the rod 10 and the annular relief 3s.

Preferably but not limitedly, in the second operative configuration, the sliding of the arms 27 of the castle 25, with respect to the arms 26 of the manoeuvre element 15, can lead to the occurrence of an "F" marking, indicated on the arms 27 of the castle 25 and indicating the "flushing" that occurs in the second operative configuration, which is concealed by the collar 12, 13 in the first operative configuration.

A method for controlling a hydraulic installation 200 in which the valve 100 subject of the invention is installed, is a further object of the invention.

Firstly, the method provides for a first step in which - in the hydraulic installation 200 - the valve 100 is installed, in particular at the return conduit 203 of the hydraulic installation 200, so that the inlet 1i of the valve is connected towards upstream on the return conduit 203 and so that the outlet 1u of the valve is connected towards downstream on the return conduit 203.

The method further comprises a step for connecting the control inlet 18 on the delivery conduit 203, by means of a small auxiliary conduit or capillary pipe 19. Due to this connection, the valve 100 can correctly read the aforementioned pressure differential. In particular, the connection of the control inlet 18 on the delivery conduit 202 may occur both before and after the connection of the inlet 1i and the outlet 1u on the return conduit 203.

Once the valve 100 is installed, the hydraulic installation 100 can be adjusted by acting on the manoeuvre element 15, which is an action of rotating the manoeuvre element 15 with respect to the valve body 1, according to screwing or unscrewing direction, in the valve embodiment described herein.

The action on the manoeuvre element 15 can be carried out in a manual actuation step and/or in an automatic actuation step by means of a servomechanism controlled by a data processing unit. The data processing unit can be a general-purpose processor specifically configured by means of said software or firmware programme to perform one or more parts of the method identified in the present invention, or a dedicated processor, specifically programmed to perform at least part of the operations of the remote-control method or process of the valve 100.

The action on the manoeuvre element determines configuration of the valve 100 in the first operative configuration in which - by varying said opening for the through-flow of the fluid between the inlet 1i and the outlet 1u, as a function of the positions taken by the intercepting element relatively to the valve body 1 - the pressure differential between the pressure present in the auxiliary chamber 18c and the pressure present in the channel is kept at a pre-defined value irrespective of the flow of the fluid traversing the return conduit 203: obviously remaining within a flow range representing the operative field of the valve.

The variation of the predefined pressure differential value, in the aforementioned first operative configuration, is determined by an action step on the manoeuvre element 15 such that, the first operative configuration being present, the manoeuvre element 15 - in the rotation thereof with respect to the upper element of the valve 2, determines a displacement of the position of the castle 25, in particular an axial translation, which determines a change of the position taken by the rod 10 with respect to the slider 3, in particular a variation of the insertion thereof with respect to the latter.

In particular, the step for adjusting the valve 100 by means of an action on the manoeuvre element 15, configures the valve 100 in the second operative configuration, in which the through-flow opening between the inlet 1i and the outlet 1u is maintained in a condition of predefined width irrespective of the pressure differential between the pressure P+ present in the auxiliary chamber 18c and the pressure P- present in the channel.

Alternatively, the step for adjusting the valve 100 by means of an action on the manoeuvre element 15, configures the valve 100 in the third operative configuration, in which the through-flow opening between the inlet 1i and the outlet 1u is maintained in a condition of full closure, irrespective of the value taken by said pressure differential between the pressure P+ present in the auxiliary chamber 18c and the pressure P- present in the channel. In particular, according to the method outlined above, the step of passing from the first to the third operative configuration causes a progressive reduction of said predefined pressure differential value before the full closure of the opening.

The present invention is subject to numerous variants that can be implemented by a man skilled in the art of heating and/or air conditioning industries and all of which fall within the scope of protection outlined by the following claims.

## Claims

1. Valve (100) for controlling the differential pressure for a hydraulic installation, having:
- a valve body (1) provided with an inlet (1i), an outlet (1u), a channel that places the inlet (1i) in fluid communication with the outlet (1u), and an auxiliary chamber,
- a sealing element (9) which separates the channel from the auxiliary chamber (18c),
- a control inlet (18) in fluid communication with the auxiliary chamber (18c),
- a fluid intercepting element (3, 5, 22) at least partly operating in the channel,
wherein the valve can be controlled in a first operative configuration, wherein the fluid intercepting element (3, 5, 22) defines -in the channel - a fluid through-flow opening between the inlet (1i) and the outlet (1u) having a variable width;
- a control member (10, 10c, 15, 25, 26) connected to the valve body (1) and active on the fluid intercepting element to control the valve in the first operative configuration,
the valve being **characterised in that** the control member is active on the fluid intercepting element for controlling the valve at least in a second operative configuration and at least in a third operative configuration, wherein:
- in the second operative configuration the fluid intercepting element (3, 5, 22) is blocked - with respect to the body (1) - in a first position conferring to the through-flow opening a pre-set width independent from the value taken by a pressure differential between a pressure (P-) present in the channel and a pressure (P+) present in the auxiliary chamber (18c);
- in the third operative configuration, the fluid intercepting element (3, 5, 22) is blocked - with respect to the body (1) - in a second position defining a complete fluid-tight closure of the through-flow opening between the inlet (1i) and the outlet (1u) of the valve, irrespective of the value taken by the pressure differential.

2. Valve according to claim 1, wherein the sealing element (9) is radially interposed between the fluid intercepting element (3, 5, 22) and the valve body (1), and wherein the fluid intercepting element (3, 5, 22) is coupled to the sealing element (9) so as to have a portion operating in the channel and a portion operating in the auxiliary chamber (18c).

3. Valve according to any one of the preceding claims, wherein the fluid intercepting element (3, 5, 22) comprises at least one slider (3) which, at the first operative configuration of the valve, is axially slidable with respect to the valve body (1) along a pre-defined sliding axis (X) to define a plurality of positions relative to the valve body (1) determining the opening of a fluid through-flow opening having a variable width as a function of the pressure differential.

4. Valve according to claim 3, wherein the control member (10, 10c, 15, 25, 26) comprises at least:
- one manoeuvre element (15) actuatable from outside the valve body (1), and
- a rod (10) at least partly introduced in the slider (3) and axially displaceable with respect to the valve body (1) by the actuation of the manoeuvre element (15).

5. Valve according to claim 4, wherein the rod (10) is axially displaceable with respect to the slider (3) at least between the following relative positions:
- a position for minimum insertion into the slider (3),
- a position for maximum insertion into the slider (3),
- a plurality of intermediate positions between the minimum insertion position and the maximum insertion position,
and wherein:
- in the minimum insertion position, an abutment portion of the rod blocks the axial sliding of the slider (3) with respect to the valve body (1),
- in the maximum insertion position, at least the or a further abutment portion of the rod blocks the axial sliding of the slider (3) with respect to the valve body (1), and
- in the plurality of intermediate positions the rod (10) enables the relative axial sliding of the slider with respect to the valve body (1).

6. Valve according to claim 5, wherein the manoeuvre element (15) can be manoeuvred in a closing direction to:
- displace the rod (10) in the maximum insertion position making the rod axially integrally joined to the slider (3) and to
- further displace the rod (10) and the slider (3) integrally joined with respect to the valve body (1) taking the valve (1) in the third operative configuration, optionally in which at the third operative configuration of the valve the abutment portion of the rod (10) acts opposing, in particular in abutment, against a first end of the slider (3); wherein the manoeuvre element (15) can be manoeuvred in the opening direction, in particular opposite to the closing direction, to
- displace the rod (10) in the minimum insertion position making the rod axially integrally joined to the slider (3) and optionally to
- further displace the rod and the slider integrally joined with respect to the valve body;
wherein the displacement of the rod (10) in the minimum insertion position or the further displacement of the rod and the slider (3) take the valve to the second operative configuration, optionally in which at the second operative configuration of the valve, the abutment portion of the rod (10) acts opposing, in particular in abutment, against an annular relief (3s) defined inside the slider (3); and in which the rod (10) traverses an upper through opening (3f) lying on a second end of the slider (3) opposite to the first end of the slider (3).

7. Valve according to any one of claims 4 to 6, wherein the control member comprises a castle (25) for guiding the rod (10), rotatably constrained with respect to the valve body (1) and axially integrally joined to said rod (10), optionally at an buttonhole (25a) present on a bottom wall of the castle (25); the castle (25) comprising a plurality of arms (27) axially extending from the upper wall of the castle (25) and engaged to the valve body (1) so that to a rotation of the castle with respect to the valve body there a corresponds an axial displacement of the castle (25) and thus the rod (10) with respect to the valve body (1); the arms (27) preferably extending along a direction substantially parallel to the pre-defined sliding axis (X) and the engagement between the arms (27) and the valve body (1) being optionally of the threaded type;
and wherein:
- the manoeuvre element (15) comprises a plurality of arms (26), in particular in a number equivalent to the number of arms (27) of the castle (25),
- the castle (25), identifies angular sectors (27s) for separation between the arms (27) thereof; and wherein
- each arm of the plurality of arms (26) of the manoeuvre element (15) is introduced into a respective angular sector (27s) present between the adjacent arms (27) of the castle (25), and in which the manoeuvre element (15) is mounted axially fixed with respect to the valve body (1), and in the manoeuvre in the closing direction or in the opening direction, causes a translation towards it relative to the castle (25).

8. Valve according to any one of claims 6 or 7, wherein the fluid intercepting element comprises a gasket (22) carried at the end part by the fluid intercepting element (3, 5, 22) itself, in particular at the first end of the slider (3), wherein the gasket (22) is configured, in the third operative configuration, for acting opposing, in particular in abutment, with the valve body (1) to define the complete closure of the through-flow between the inlet (1i) and the outlet (1u) of the valve.

9. Valve according to any one of claims 3 to 8 comprising:
an opposing spring (17) operatively interposed between the slider (3) and the rod (10) and configured to exert, at least in the first operative configuration of the valve, a force for contrasting the relative axial displacement between the slider (3) and the rod (10) which tends to extract the rod from the slider (3), wherein the slider (3) and the contrast spring (17) are entirely contained in the valve body (1) and wherein the relative displacement of the rod with respect to the slider in the plurality of intermediate positions between the minimum insertion position and the maximum insertion position determines an adjustment of an elastic contrast action exerted by the spring on the slider (3);
optionally wherein the opposing spring (17) comprises a first end arranged in abutment with an abutment integrally joined to the rod, optionally comprising an end collar (10c) of the rod (10) and a second end contrasting an abutment integrally joined to the slider (3), for example comprising a wall of the slider (3) delimiting an upper through opening (3f) and extending obliquely with respect to the pre-defined sliding axis (X).

10. Valve according to any one of claims 4 to 9, wherein, in the first, second and third operative configuration of the valve, the manoeuvre element (15) is connected to the valve body (1), and it is configured to determine the axial sliding of the rod (10) with respect to the valve body (1) along the pre-defined sliding axis (X) following the rotation of the manoeuvre element with respect to the valve body (1).

11. Valve according to any one of the preceding claims, wherein the sealing element (9) is an annular membrane surrounding a portion of the fluid intercepting element (3, 5, 22), wherein the membrane is constrained to the valve body (1) at an outer perimeter thereof and to the fluid intercepting element at an inner perimeter thereof; and wherein the first position for the fluid intercepting element (3, 5, 22) is an end-stop position in which the through-flow opening has maximum width.

12. Valve according to any one of the preceding claims further comprising a lower slider (6) axially engaged to an end of the fluid intercepting element and mobile with respect to the fluid intercepting element (3, 5, 22) between a first end-stop position, in which such lower slider has a minimum or no axial projection with respect to the end of the intercepting element, and a second end-stop position, in which the lower slider (6) has a maximum axial projection with respect to the end of the fluid intercepting element; wherein the lower slider (6) is configured to be displaced from the second towards the first end-stop position due to a displacement of the fluid intercepting element (3, 5, 22) with respect to the valve body (1) along the pre-defined sliding axis (X) that carries the lower slider (6) at contact with the valve body (1); wherein the valve body (1) comprises a spring (23) interposed between the end of the fluid intercepting element and the lower slider (6); the spring (23) being configured to exert a force for mutual axial movement apart between the lower slider (6) and the fluid intercepting element (3, 5, 22) such to constantly push the lower slider (6) towards the second end-stop position and wherein the lower slider (6) surrounds the gasket (22) and has an axial extension along the pre-defined sliding axis (X) which is greater with respect to the axial extension that the gasket (22) has along the pre-defined sliding axis (X).

13. Valve according to any one of the preceding claims when depending on claim 3, wherein the fluid intercepting element (3, 5, 22) is oriented in the axial direction with a direction locally taken by the fluid passing through the inlet (1i) of the valve, and wherein the second closing direction is contrary with respect to the direction - locally in use - taken by the flow and wherein the sealing element (9) faces, on a first side, directly on the channel and on a second side opposite to the first, directly on the auxiliary chamber (18c), and wherein the sealing element is contained in a portion (8) of the valve body surrounding at least part of the fluid intercepting element (3, 5, 22) and having at least one wall which is oriented in a direction substantially parallel to the pre-defined sliding axis (X).

14. Hydraulic installation (200), comprising a delivery conduit (202) supplying a pre-set number of appliances, optionally a pre-set number of heat exchangers, and a return conduit (203) configured to receive a fluid flowing out from the appliances, the hydraulic installation (200) further comprising a valve (100) according to any one of the preceding claims installed on the return conduit (203) with the control inlet (18) connected to the delivery conduit (202).

15. Method for controlling a hydraulic installation (200) according to claim 14, the method comprising:
- a step of installing a valve (100) according to any one of the preceding claims 1-13 at a return conduit (203) of the hydraulic installation (200), so that the inlet (1i) of the valve (100) is connected - upstream - to the return conduit (203) and so that the outlet (1u) of the valve (100) is connected - downstream - to the return conduit (203) and so that the control inlet (18) is connected to the delivery conduit (202);
- at least one step for adjusting the valve (100) by means of an action on the manoeuvre element (15) to configure the valve (100) in the first operative configuration in which - by varying the fluid through-flow opening between the inlet (1i) and the outlet (1u) as a function of the positions taken by the intercepting element (3, 5, 22) relatively to the valve body (1) - a pressure differential between the pressure (P+) present in the auxiliary chamber (18c) and the pressure (P-) present in the channel is kept at a pre-defined value irrespective of the flow of the fluid traversing the return conduit (203);
wherein the step for adjusting the valve (100) by means of an action on the manoeuvre element (15) configures the valve (100) in the second operative configuration alternative to the first operative configuration in which the fluid through-flow opening between the inlet (1i) and the outlet (1u) is maintained in a condition of predefined width irrespective of the pressure differential between the pressure (P+) present in the auxiliary chamber (18c) and the pressure (P-) present in the channel; and/or
wherein the step of adjusting the valve (100) - by means of an action on the manoeuvre element (15) - configures the valve (100) in the third operative configuration alternative to the first operative configuration or alternative to the second operative configuration, in which the fluid through-flow opening between the inlet (1i) and the outlet (1u) is kept in a complete closure condition irrespective of the value taken by the pressure differential between the pressure (P+) present in the auxiliary chamber (18c) and the pressure (P-) present in the channel; the method further comprises a step for varying the pre-defined differential pressure value between the pressure (P+) present in the auxiliary chamber (18c) and the pressure (P-) present in the channel by means of a variation of the position that the manoeuvre element (15) takes with respect to the valve body (1) and wherein the actuation of the manoeuvre element (15) to determine passing from the first operative configuration to the third operative configuration causes a reduction of the pre-defined pressure differential value.

## Patentansprüche

1. Ventil (100) zum Regeln des Differenzdrucks für eine hydraulische Installation, aufweisend:
- einen Ventilkörper (1), welcher mit einem Einlass (1i), einem Auslass (1u), einem Kanal, welcher den Einlass (1i) in Fluidkommunikation mit dem Auslass (1u) setzt, und einer Nebenkammer bereitgestellt ist,
- ein Dichtelement (9), welches den Kanal von der Nebenkammer (18c) trennt,
- einen Regeleinlass (18) in Fluidverbindung mit der Nebenkammer (18c),
- ein Fluidabfangelement (3, 5, 22), welches wenigstens teilweise in dem Kanal wirkt,
wobei das Ventil in einer ersten operativen Konfiguration geregelt werden kann, wobei das Fluidabfangelement (3, 5, 22) - in dem Kanal - eine Fluiddurchströmungsöffnung zwischen dem Einlass (1i) und dem Auslass (1u) mit einer variablen Breite definiert;
- ein Regelelement (10, 10c, 15, 25, 26), welches mit dem Ventilkörper (1) verbunden ist und an dem Fluidabfangelement aktiv ist, um das Ventil in der ersten operativen Konfiguration zu regeln,
wobei das Ventil **dadurch gekennzeichnet ist, dass** das Regelelement zum Regeln des Ventils wenigstens in einer zweiten operativen Konfiguration und wenigstens in einer dritten operativen Konfiguration an dem Fluidabfangelement aktiv ist, wobei:
- in der zweiten operativen Konfiguration das Fluidabfangelement (3, 5, 22) - in Bezug auf den Körper (1) - in einer ersten Position blockiert ist, welche der Durchströmungsöffnung eine vorgegebene Breite verleiht, welche von dem durch eine Druckdifferenz zwischen einem in dem Kanal vorhandenen Druck (P-) und einem in der Nebenkammer (18c) vorhandenen Druck (P+) eingenommenen Wert unabhängig ist;
- in der dritten operativen Konfiguration das Fluidabfangelement (3, 5, 22) - in Bezug auf den Körper (1) - in einer zweiten Position blockiert ist, welche ungeachtet des durch die Druckdifferenz eingenommenen Werts einen vollständig fluiddichten Verschluss der Durchströmungsöffnung zwischen dem Einlass (1i) und dem Auslass (1u) des Ventils definiert.

2. Ventil nach Anspruch 1, wobei das Dichtelement (9) radial zwischen dem Fluidabfangelement (3, 5, 22) und dem Ventilkörper (1) eingefügt ist und wobei das Fluidabfangelement (3, 5, 22) derart mit dem Dichtelement (9) gekoppelt ist, dass es einen Abschnitt, welcher in dem Kanal wirkt, und einen Abschnitt aufweist, welcher in der Nebenkammer (18c) wirkt.

3. Ventil nach einem der vorhergehenden Ansprüche, wobei das Fluidabfangelement (3, 5, 22) wenigstens einen Schieber (3) umfasst, welcher in der ersten operativen Konfiguration des Ventils in Bezug auf den Ventilkörper (1) axial entlang einer vordefinierten Schiebeachse (X) verschiebbar ist, um relativ zu dem Ventilkörper (1) eine Mehrzahl von Positionen zu definieren, welche die Öffnung einer Fluiddurchströmungsöffnung mit einer variablen Breite als eine Funktion der Druckdifferenz festlegen.

4. Ventil nach Anspruch 3, wobei das Regelelement (10, 10c, 15, 25, 26) wenigstens umfasst:
- ein Manövrierelement (15), welches von außerhalb des Ventilkörpers (1) betätigbar ist, und
- eine Stange (10), welche wenigstens teilweise in den Schieber (3) eingeführt ist und durch die Betätigung des Manövrierelements (15) in Bezug auf den Ventilkörper (1) axial verlagerbar ist.

5. Ventil nach Anspruch 4, wobei die Stange (10) in Bezug auf den Schieber (3) axial verlagerbar ist wenigstens zwischen den folgenden relativen Positionen:
- eine Position für ein minimales Einführen in den Schieber (3),
- eine Position für ein maximales Einführen in den Schieber (3),
- eine Mehrzahl von Zwischenpositionen zwischen der Position minimalen Einführens und der Position maximalen Einführens,
und wobei:
- in der Position minimalen Einführens ein Anlageabschnitt der Stange das axiale Verschieben des Schiebers (3) in Bezug auf den Ventilkörper (1) blockiert,
- in der Position maximalen Einführens wenigstens der oder ein weiterer Anlageabschnitt der Stange das axiale Verschieben des Schiebers (3) in Bezug auf den Ventilkörper (1) blockiert und
- in der Mehrzahl von Zwischenpositionen die Stange (10) das relative axiale Verschieben des Schiebers in Bezug auf den Ventilkörper (1) ermöglicht.

6. Ventil nach Anspruch 5, wobei das Manövrierelement (15) in einer Schließrichtung manövriert werden kann, um:
- die Stange (10) in die Position maximalen Einführens zu verlagern, die Stange axial integral mit dem Schieber (3) in Verbindung bringend, und um
- die Stange (10) und den Schieber (3), welche integral verbunden sind, in Bezug auf den Ventilkörper (1) weiter zu verlagern, das Ventil (1) in die dritte operative Konfiguration bringend, optional wobei in der dritten operativen Konfiguration des Ventils der Anlageabschnitt der Stange (10), insbesondere in Anlage, entgegengesetzt gegen ein erstes Ende des Schiebers (3) wirkt; wobei das Manövrierelement (15) in der Öffnungsrichtung, insbesondere entgegengesetzt der Schließrichtung manövriert, werden kann, um
- die Stange (10) in die Position minimalen Einführens zu verlagern, die Stange axial integral mit dem Schieber (3) in Verbindung bringend, und optional um
- die Stange und den Schieber, welche integral verbunden sind, in Bezug auf den Ventilkörper weiter zu verlagern;
wobei die Verlagerung der Stange (10) in der Position minimalen Einführens oder die weitere Verlagerung der Stange und des Schiebers (3) das Ventil zu der zweiten operativen Konfiguration bringen, optional wobei in der zweiten operativen Konfiguration des Ventils der Anlageabschnitt der Stange (10), insbesondere in Anlage, entgegengesetzt gegen eine ringförmige Aussparung (3s) wirkt, welche innerhalb des Schiebers (3) definiert ist; und wobei die Stange (10) eine obere Durchgangsöffnung (3f) durchsetzt, welche dem ersten Ende des Schiebers (3) entgegengesetzt an einem zweiten Ende des Schiebers (3) liegt.

7. Ventil nach einem der vorhergehenden Ansprüche 4 bis 6, wobei das Regelelement einen Turm (25) zum Führen der Stange (10) umfasst, welcher in Bezug auf den Ventilkörper (1) drehbar an die Stange (10) gezwängt ist und axial integral mit der Stange (10) verbunden ist, optional an einem Knopfloch (25a), welches an einer Bodenwand des Turms (25) vorhanden ist; wobei der Turm (25) eine Mehrzahl von Armen (27) umfasst, welche sich axial von der oberen Wand des Turms (25) erstrecken und mit dem Ventilkörper (1) in Eingriff stehen, so dass eine Drehung des Turms in Bezug auf den Ventilkörper einer axialen Verlagerung des Turms (25) und somit der Stange (10) in Bezug auf den Ventilkörper (1) entspricht; wobei sich die Arme (27) vorzugsweise entlang einer zu der vordefinierten Schiebeachse (X) im Wesentlichen parallelen Richtung erstrecken und der Eingriff zwischen den Armen (27) und dem Ventilkörper (1) optional vom Gewindetyp ist;
und wobei:
- das Manövrierelement (15) eine Mehrzahl von Armen (26) umfasst, insbesondere in einer zu der Anzahl von Armen (27) des Turms (25) äquivalenten Anzahl,
- der Turm (25) Winkelsektoren (27s) für eine Trennung zwischen den Armen davon bestimmt; und wobei
- jeder Arm der Mehrzahl von Armen (26) des Manövrierelements (15) in einen jeweiligen Winkelsektor (27s) eingeführt ist, welcher zwischen den benachbarten Armen (27) des Turms (25) vorhanden ist, und wobei das Manövrierelement (15) in Bezug auf den Ventilkörper (1) axial fixiert montiert ist und bei dem Manövrieren in der Schließrichtung oder in der Öffnungsrichtung relativ zu dem Turm (25) eine Translation darauf zu bewirkt.

8. Ventil nach einem der vorhergehenden Ansprüche 6 oder 7, wobei das Fluidabfangelement eine Dichtung (22) umfasst, welche an dem Endteil durch das Fluidabfangelement (3, 5, 22) selbst getragen ist, insbesondere an dem ersten Ende des Schiebers (3), wobei die Dichtung (22) dazu eingerichtet ist, in der dritten operativen Konfiguration, insbesondere in Anlage, entgegengesetzt zu dem Ventilkörper (1) zu wirken, um den vollständigen Verschluss der Durchströmung zwischen dem Einlass (1i) und dem Auslass (1u) des Ventils zu definieren.

9. Ventil nach einem der vorhergehenden Ansprüche 3 bis 8, umfassend:
eine entgegengesetzte Feder (17), welche operativ zwischen dem Schieber (3) und der Stange (10) eingefügt ist und dazu eingerichtet ist, wenigstens in der ersten operativen Konfiguration des Ventils eine Kraft für ein Entgegenstehen der relativen axialen Verlagerung zwischen dem Schieber (3) und der Stange (10) auszuüben, welche danach strebt, die Stange aus dem Schieber (3) herauszuziehen, wobei der Schieber (3) und die Gegendruckfeder (17) vollständig in dem Ventilkörper (1) enthalten sind und wobei die relative Verlagerung der Stange in Bezug auf den Schieber in der Mehrzahl von Zwischenpositionen zwischen der Position minimalen Einführens und der Position maximalen Einführens eine Einstellung einer durch die Feder auf den Schieber (3) ausgeübten elastischen Gegendruckaktion festlegt;
optional wobei die entgegengesetzte Feder (17) ein erstes Ende, welches in Anlage mit einer integral mit der Stange verbundenen Anlage eingerichtet ist, welche optional einen Endkragen (10c) der Stange (10) umfasst, und ein zweites Ende umfasst, welches einer integral mit dem Schieber (3) verbundenen Anlage entgegensteht, welche zum Beispiel eine Wand des Schiebers (3) umfasst, welche eine obere Durchgangsöffnung (3f) begrenzt und sich in Bezug auf die vordefinierte Schiebeachse (X) geneigt erstreckt.

10. Ventil nach einem der vorhergehenden Ansprüche 4 bis 9, wobei in der ersten, der zweiten und der dritten Konfiguration des Ventils das Manövrierelement (15) mit dem Ventilkörper (1) verbunden ist und es dazu eingerichtet ist, die axiale Verschiebung der Stange (10) in Bezug auf den Ventilkörper (1) entlang der vordefinierten Schiebeachse (X) der Drehung des Manövrierelements in Bezug auf den Ventilkörper (1) folgend festzulegen.

11. Ventil nach einem der vorhergehenden Ansprüche, wobei das Dichtelement (9) eine ringförmige Membran ist, welche einen Abschnitt des Fluidabfangelements (3, 5, 22) umgibt, wobei die Membran an einem äußeren Umfang davon an den Ventilkörper (1) und an einem inneren Umfang davon an das Fluidabfangelement gezwängt ist;
und wobei die erste Position für das Fluidabfangelement (3, 5, 22) eine Endanschlagposition ist, in welcher die Durchströmungsöffnung eine maximale Breite aufweist.

12. Ventil nach einem der vorhergehenden Ansprüche, ferner umfassend einen unteren Schieber (6), welcher mit einem Ende des Fluidabfangelements axial in Eingriff steht und in Bezug auf das Fluidabfangelement (3, 5, 22) zwischen einer ersten Endanschlagposition, in welcher ein derartiger unterer Schieber einen minimalen oder keinen axialen Überstand in Bezug auf das Ende des Abfangelements aufweist, und einer zweiten Endanschlagposition beweglich ist, in welcher der untere Schieber (6) einen maximalen axialen Überstand in Bezug auf das Ende des Abfangelements aufweist; wobei der untere Schieber (6) dazu eingerichtet ist, aufgrund einer Verlagerung des Fluidabfangelements (3, 5, 22) in Bezug auf den Ventilkörper (1) entlang der vordefinierten Schiebeachse (X), welche den unteren Schieber (6) in Kontakt mit dem Ventilkörper (1) trägt, von der zweiten in Richtung der ersten Endanschlagposition verlagert zu werden; wobei der Ventilkörper (1) eine Feder (23) umfasst, welche zwischen dem Ende des Fluidabfangelements und dem unteren Schieber (6) eingefügt ist; wobei die Feder (23) dazu eingerichtet ist, eine Kraft für eine gegenseitige axiale Auseinanderbewegung zwischen dem unteren Schieber (6) und dem Fluidabfangelement (3, 5, 22) derart auszuüben, dass der untere Schieber (6) konstant in Richtung der zweiten Endanschlagposition gedrückt wird, und wobei der untere Schieber (6) die Dichtung (22) umgibt und eine axiale Erstreckung entlang der vordefinierten Schiebeachse (X) aufweist, welche in Bezug auf die axiale Erstreckung größer ist, welche die Dichtung (22) entlang der vordefinierten Schiebeachse (X) aufweist.

13. Ventil nach einem der vorhergehenden Ansprüche, wenn abhängig von Anspruch 3, wobei das Fluidabfangelement (3, 5, 22) in der axialen Richtung mit einer Richtung ausgerichtet ist, welche lokal durch das Fluid eingenommen wird, welches durch den Einlass (1i) des Ventils verläuft, und wobei die zweite Schließrichtung in Bezug auf die - lokal verwendete - Richtung, welche durch die Strömung eingenommen wird, konträr ist und wobei das Dichtelement (9) an einer ersten Seite direkt dem Kanal und an einer der ersten Seite entgegengesetzten zweiten Seite direkt der Nebenkammer (18c) zugewandt ist, und wobei das Dichtelement in einem Abschnitt (8) des Ventilkörpers enthalten ist, welcher wenigstens einen Teil des Fluidabfangelements (3, 5, 22) umgibt und wenigstens eine Wand aufweist, welche in einer zu der vordefinierten Schiebeachse (X) im Wesentlichen parallelen Richtung ausgerichtet ist.

14. Hydraulische Installation (200), umfassend eine Zuführleitung (202), welche eine vorgegebene Anzahl von Vorrichtungen, optional eine vorgegebene Anzahl von Wärmetauschern, bereitstellt, und eine Rückführleitung (203), welche dazu eingerichtet ist, ein Fluid aufzunehmen, welches aus den Vorrichtungen strömt, wobei die hydraulische Installation (200) ferner ein Ventil (100) nach einem der vorhergehenden Ansprüche umfasst, welches an der Rückführleitung (203) installiert ist, wobei der Regeleinlass (18) mit der Zuführleitung (202) verbunden ist.

15. Verfahren zum Regeln einer hydraulischen Installation (200) nach Anspruch 14, wobei das Verfahren umfasst:
- einen Schritt eines Installierens eines Ventils (100) nach einem der vorhergehenden Ansprüche 1-13 an einer Rückführleitung (203) der hydraulischen Installation (200), derart dass der Einlass (1i) des Ventils (100) - stromaufwärts - mit der Rückführleitung (203) verbunden ist und derart dass der Auslass (1u) des Ventils (100) - stromabwärts - mit der Rückführleitung (203) verbunden ist und derart dass der Regeleinlass (18) mit der Zuführleitung (202) verbunden ist;
- wenigstens einen Schritt zum Einstellen des Ventils (100) mittels einer Aktion an dem Manövrierelement (15) zum Einrichten des Ventils (100) in der ersten operativen Konfiguration, in welcher - durch ein Variieren der Fluiddurchströmungsöffnung zwischen dem Einlass (1i) und dem Auslass (1u) als eine Funktion der durch das Abfangelement (3, 5, 22) relativ zu dem Ventilkörper (1) eingenommenen Positionen - eine Druckdifferenz zwischen dem in der Nebenkammer (18c) vorhandenen Druck (P+) und dem in dem Kanal vorhandenen Druck (P-) ungeachtet der Strömung des die Rückführleitung (203) durchströmenden Fluids bei einem vordefinierten Wert gehalten wird;
wobei der Schritt zum Einstellen des Ventils (100) mittels einer Aktion an dem Manövrierelement (15) das Ventil (100) alternativ zu der ersten operativen Konfiguration in der zweiten operativen Konfiguration einrichtet, in welcher die Fluiddurchströmungsöffnung zwischen dem Einlass (1i) und dem Auslass (1u) ungeachtet der Druckdifferenz zwischen dem in der Nebenkammer (18c) vorhandenen Druck (P+) und dem in dem Kanal vorhandenen Druck (P-) in einem Zustand vordefinierter Breite gehalten wird; und/oder
wobei der Schritt zum Einstellen des Ventils (100) - mittels einer Aktion an dem Manövrierelement (15) - das Ventil (100) alternativ zu der ersten operativen Konfiguration oder alternativ zu der zweiten operativen Konfiguration in der dritten operativen Konfiguration einrichtet, in welcher die Fluiddurchströmungsöffnung zwischen dem Einlass (1i) und dem Auslass (1u) ungeachtet des durch die Druckdifferenz zwischen dem in der Nebenkammer (18c) vorhandenen Druck (P+) und dem in dem Kanal vorhandenen Druck (P-) eingenommenen Werts in einem komplett geschlossenen Zustand gehalten wird; wobei das Verfahren ferner einen Schritt zum Variieren des vordefinierten Differenzdruckwerts zwischen dem in der Nebenkammer (18c) vorhandenen Druck (P+) und dem in dem Kanal vorhandenen Druck (P-) mittels einer Variation der Position umfasst, welche das Manövrierelement (15) in Bezug auf den Ventilkörper (1) einnimmt, und wobei die Betätigung des Manövrierelements (15) zum Festlegen eines Übergehens von der ersten operativen Konfiguration zu der dritten operativen Konfiguration eine Reduzierung des vordefinierten Druckdifferenzwerts bewirkt.

## Revendications

1. Vanne (100) de régulation de la pression différentielle d'une installation hydraulique, ayant :
- un corps de vanne (1) prévu avec un orifice d'entrée (1i), un orifice de sortie (1u), un canal qui place l'orifice d'entrée (1i) en communication fluidique avec l'orifice de sortie (1u), et une chambre auxiliaire,
- un élément d'étanchéité (9) qui sépare le canal de la chambre auxiliaire (18c),
- un orifice d'entrée de commande (18) en communication fluidique avec la chambre auxiliaire (18c),
- un élément d'interception de liquide (3, 5, 22) fonctionnant au moins partiellement dans le canal,
la vanne pouvant être commandée dans une première configuration de fonctionnement, l'élément d'interception de liquide (3, 5, 22) définissant - dans le canal - une ouverture traversante de liquide entre l'orifice d'entrée (1i) et l'orifice de sortie (1u) ayant une largeur variable ;
- un élément de commande (10, 10c, 15, 25, 26) relié au corps de vanne (1) et actif sur l'élément d'interception de liquide pour commander la vanne dans la première configuration de fonctionnement,
la vanne étant **caractérisée en ce que** l'élément de commande est actif sur l'élément d'interception de liquide pour commander la vanne au moins en une seconde configuration de fonctionnement et au moins en une troisième configuration de fonctionnement, où :
- dans la seconde configuration de fonctionnement l'élément d'interception de liquide (3, 5, 22) est bloqué - par rapport au corps (1) - dans une première position conférant à l'ouverture traversante une largeur prédéfinie indépendante de la valeur prise par un différentiel de pression entre une pression (P-) présente dans le canal et une pression (P+) présente dans la chambre auxiliaire (18c) ;
- dans la troisième configuration de fonctionnement, l'élément d'interception de liquide (3, 5, 22) est bloqué - par rapport au corps (1) - dans une seconde position définissant une fermeture complète hermétique aux liquides de l'ouverture traversante entre l'orifice d'entrée (1i) et l'orifice de sortie (1u) de la vanne, quelle que soit la valeur prise par le différentiel de pression.

2. Vanne selon la revendication 1, dans laquelle l'élément d'étanchéité (9) est radialement interposé entre l'élément d'interception de liquide (3, 5, 22) et le corps de vanne (1), et où l'élément d'interception de liquide (3, 5, 22) est relié à l'élément d'étanchéité (9) afin d'avoir une partie fonctionnant dans le canal et une partie fonctionnant dans la chambre auxiliaire (18c).

3. Vanne selon l'une quelconque des revendications précédentes, l'élément d'interception de liquide (3, 5, 22) comprenant au moins un élément coulissant (3) qui, à la première configuration de fonctionnement de la vanne, peut axialement coulisser par rapport au corps de vanne (1) le long d'un axe coulissant prédéfini (X) pour définir une pluralité de positions par rapport au corps de vanne (1) déterminant l'ouverture d'une ouverture traversante de liquide ayant une largeur variable comme une fonction du différentiel de pression.

4. Vanne selon la revendication 3, dans laquelle l'élément de commande (10, 10c, 15, 25, 26) comprend au moins :
- un élément de manœuvre (15) pouvant être actionné depuis l'extérieur du corps de vanne (1), et
- une tige (10) au moins partiellement introduite dans l'élément coulissant (3) et pouvant être axialement déplacée par rapport au corps de vanne (1) par l'actionnement de l'élément de manœuvre (15).

5. Vanne selon la revendication 4, la tige (10) étant axialement déplaçable par rapport à l'élément coulissant (3) au moins entre les positions relatives suivantes :
- une position pour l'insertion minimale dans l'élément coulissant (3),
- une position pour l'insertion maximale dans l'élément coulissant (3),
- une pluralité de positions intermédiaires entre la position d'insertion minimale et la position d'insertion maximale, et où :
- dans la position d'insertion minimale, une partie de mise en butée de la tige bloque le coulissement axial de l'élément coulissant (3) par rapport au corps de vanne (1),
- dans la position d'insertion maximale, au moins la ou une partie de mise en butée supplémentaire de la tige bloque le coulissement axial de l'élément coulissant (3) par rapport au corps de vanne (1), et
- dans la pluralité des positions intermédiaires la tige (10) permet le coulissement axial relatif de l'élément coulissant par rapport au corps de vanne (1).

6. Vanne selon la revendication 5, dans laquelle l'élément de manœuvre (15) peut être manœuvré dans un sens de fermeture pour :
- déplacer la tige (10) dans la position d'insertion maximale rendant la tige axialement intégralement jointe à l'élément coulissant (3) et pour
- déplacer en outre la tige (10) et l'élément coulissant (3) intégralement joints par rapport au corps de vanne (1) plaçant la vanne (1) dans la troisième configuration de fonctionnement, éventuellement dans laquelle à la troisième configuration de fonctionnement de la vanne la partie de mise en butée de la tige (10) agit à l'opposé, en particulier en butée, contre une première extrémité de l'élément coulissant (3) ; l'élément de manœuvre (15) pouvant être manœuvré dans le sens d'ouverture, en particulier opposé au sens de fermeture, pour
- déplacer la tige (10) dans la position d'insertion minimale rendant la tige axialement intégralement jointe à l'élément coulissant (3) et éventuellement pour
- déplacer ultérieurement la tige et l'élément coulissant intégralement joints par rapport au corps de vanne ;
où le déplacement de la tige (10) dans la position d'insertion minimale ou le déplacement ultérieur de la tige et de l'élément coulissant (3) placent la vanne dans la seconde configuration de fonctionnement, éventuellement dans laquelle à la seconde configuration de fonctionnement de la vanne, la partie de mise en butée de la tige (10) agit à l'opposé, en particulier en butée, contre un relief annulaire (3s) défini à l'intérieur de l'élément coulissant (3) ; et dans lequel la tige (10) traverse une ouverture supérieure traversante (3f) reposant sur une seconde extrémité de l'élément coulissant (3) opposée à la première extrémité de l'élément coulissant (3).

7. Vanne selon l'une quelconque des revendications 4 à 6, dans laquelle l'élément de commande comprend un crénelage (25) pour guider la tige (10), contrainte de manière à pouvoir tourner par rapport au corps de vanne (1) et axialement intégralement joint à ladite tige (10), éventuellement au niveau d'une boutonnière (25a) présente sur une paroi inférieure du crénelage (25) ; le crénelage (25) comprenant une pluralité de bras (27) s'étendant axialement depuis la paroi supérieure du crénelage (25) et engagés au niveau du corps de vanne (1) de sorte que à une rotation du crénelage par rapport au corps de vanne correspond un déplacement axial du crénelage (25) et ainsi de la tige (10) par rapport au corps de vanne (1); les bras (27) s'étendant préférablement le long d'un sens sensiblement parallèle à l'axe coulissant prédéfini (X) et l'engagement entre les bras (27) et le corps de vanne (1) étant éventuellement du type fileté ;
et où :
- l'élément de manœuvre (15) comprend une pluralité de bras (26), en particulier en un nombre équivalent au nombre de bras (27) du crénelage (25),
- le crénelage (25), identifiant des secteurs angulaires (27s) pour la séparation entre ses bras (27) ; et où
- chaque bras de la pluralité de bras (26) de l'élément de manœuvre (15) est introduit en un secteur angulaire respectif (27s) présent entre les bras adjacents (27) du crénelage (25), et dans lequel l'élément de manœuvre (15) est monté axialement fixé par rapport au corps de vanne (1), et dans la manœuvre dans le sens de fermeture ou dans le sens d'ouverture, amène une translation vers lui par rapport au crénelage (25).

8. Vanne selon l'une quelconque des revendications 6 ou 7, l'élément d'interception de liquide comprenant un joint d'étanchéité (22) porté au niveau de la partie d'extrémité par l'élément d'interception de liquide (3, 5, 22) lui-même, en particulier au niveau de la première extrémité de l'élément coulissant (3), où le joint d'étanchéité (22) est configuré, dans la troisième configuration de fonctionnement, pour agir à l'opposé, en particulier en butée, avec le corps de vanne (1) pour définir la fermeture complète de l'écoulement traversant entre l'orifice d'entrée (1i) et l'orifice de sortie (1u) de la vanne.

9. Vanne selon l'une quelconque des revendications 3 à 8 comprenant :
un ressort opposé (17) fonctionnellement interposé entre l'élément coulissant (3) et la tige (10) et configuré pour exercer, au moins dans la première configuration de fonctionnement de la vanne, une force pour faire contraster le déplacement axial relatif entre l'élément coulissant (3) et la tige (10) qui tend à extraire la tige de l'élément coulissant (3), où l'élément coulissant (3) et le ressort en contraste (17) sont entièrement contenus dans le corps de vanne (1) et où le déplacement relatif de la tige par rapport à l'élément coulissant dans la pluralité des positions intermédiaires entre la position d'insertion minimale et la position d'insertion maximale détermine un ajustement de l'action de contraste élastique exercée par le ressort sur l'élément coulissant (3) ;
éventuellement où le ressort opposé (17) comprend une première extrémité disposée en butée avec une butée intégralement jointe à la tige, éventuellement comprenant un collier d'extrémité (10c) de la tige (10) et une seconde extrémité faisant contraster une butée intégralement jointe à l'élément coulissant (3), par exemple comprenant une paroi de l'élément coulissant (3) délimitant une ouverture supérieure traversante (3f) et s'étendant obliquement par rapport à l'axe coulissant prédéfini (X).

10. Vanne selon l'une quelconque des revendications 4 à 9, dans laquelle, dans la première, seconde et troisième configuration de fonctionnement de la vanne, l'élément de manœuvre (15) est relié au corps de vanne (1), et est configuré pour déterminer le coulissement axial de la tige (10) par rapport au corps de vanne (1) le long de l'axe coulissant prédéfini (X) suite à la rotation de l'élément de manœuvre par rapport au corps de vanne (1).

11. Vanne selon l'une quelconque des revendications précédentes, dans laquelle l'élément d'étanchéité (9) est une membrane annulaire entourant une partie de l'élément d'interception de liquide (3, 5, 22), où la membrane est contrainte au corps de vanne (1) au niveau de son périmètre externe et à l'élément d'interception de liquide au niveau de son périmètre interne ;
et où la première position pour l'élément d'interception de liquide (3, 5, 22) est une position d'arrêt d'extrémité dans laquelle l'ouverture traversante présente la largeur maximale.

12. Vanne selon l'une quelconque des revendications précédentes comprenant en outre un élément coulissant inférieur (6) axialement engagé au niveau d'une extrémité de l'élément d'interception de liquide et mobile par rapport à l'élément d'interception de liquide (3, 5, 22) entre une première position d'arrêt d'extrémité, dans laquelle un tel élément coulissant inférieur présente une projection axiale minimale ou nulle par rapport à l'extrémité de l'élément d'interception, et une seconde position d'arrêt d'extrémité, dans laquelle l'élément coulissant inférieur (6) présente une projection axiale maximale par rapport à l'extrémité de l'élément d'interception de liquide ; où l'élément coulissant inférieur (6) est configuré pour être déplacé depuis la seconde vers la première position d'arrêt d'extrémité dû à un déplacement de l'élément d'interception de liquide (3, 5, 22) par rapport au corps de vanne (1) le long de l'axe coulissant prédéfini (X) qui porte l'élément coulissant inférieur (6) au niveau d'un contact avec le corps de vanne (1) ; où le corps de vanne (1) comprend un ressort (23) interposé entre l'extrémité de l'élément d'interception de liquide et l'élément coulissant inférieur (6) ; le ressort (23) étant configuré pour exercer une force pour le mouvement axial mutuel à l'écart entre l'élément coulissant inférieur (6) et l'élément d'interception de liquide (3, 5, 22) afin de pousser constamment l'élément coulissant inférieur (6) vers la seconde position d'arrêt d'extrémité et où l'élément coulissant inférieur (6) entoure le joint d'étanchéité (22) et présente une extension axiale le long de l'axe coulissant prédéfini (X) qui est supérieure par rapport à l'extension axiale que présente le joint d'étanchéité (22) le long de l'axe coulissant prédéfini (X).

13. Vanne selon l'une quelconque des revendications précédentes lorsqu'elle dépend de la revendication 3, dans laquelle l'élément d'interception de liquide (3, 5, 22) est orienté dans le sens axial avec un sens localement pris par le liquide passant à travers l'orifice d'entrée (1i) de la vanne, et où le second sens de fermeture est contraire par rapport au sens - localement durant l'utilisation - pris par l'écoulement et où l'élément d'étanchéité (9) fait face, sur un premier côté, directement sur le canal et sur un second côté opposé au premier, directement sur la chambre auxiliaire (18c), et où l'élément d'étanchéité est contenu dans une partie (8) du corps de vanne entourant au moins une partie de l'élément d'interception de liquide (3, 5, 22) et ayant au moins une paroi qui est orientée dans un sens sensiblement parallèle à l'axe coulissant prédéfini (X).

14. Installation hydraulique (200), comprenant un conduit de distribution (202) alimentant un nombre prédéfini d'appareils, éventuellement un nombre prédéfini d'échangeurs thermiques, et un conduit de retour (203) configuré pour recevoir un liquide s'écoulant hors des appareils, l'installation hydraulique (200) comprenant en outre une vanne (100) selon l'une quelconque des revendications précédentes installée sur le conduit de retour (203) avec l'orifice d'entrée de commande (18) relié au conduit de distribution (202).

15. Procédé de commande d'une installation hydraulique (200) selon la revendication 14, le procédé comprenant :
- une étape d'installation d'une vanne (100) selon l'une quelconque des revendications précédentes 1 à 13 au niveau d'un conduit de retour (203) de l'installation hydraulique (200), de sorte que l'orifice d'entrée (1i) de la vanne (100) est relié - en amont - au conduit de retour (203) et de sorte que l'orifice de sortie (1u) de la vanne (100) est relié - en aval - au conduit de retour (203) et de sorte que l'orifice d'entrée de commande (18) est relié au conduit de distribution (202) ;
- au moins une étape d'ajustement de la vanne (100) à l'aide d'une action de l'élément de manœuvre (15) pour configurer la vanne (100) dans la première configuration de fonctionnement dans laquelle - en faisant varier l'ouverture traversante de liquide entre l'orifice d'entrée (1i) et l'orifice de sortie (1u) comme une fonction des positions prises par l'élément d'interception (3, 5, 22) relativement au corps de vanne (1) - un différentiel de pression entre la pression (P+) présente dans la chambre auxiliaire (18c) et la pression (P-) présente dans le canal est maintenu à une valeur prédéfinie quel que soit l'écoulement du liquide traversant le conduit de retour (203) ;
où l'étape d'ajustement de la vanne (100) à l'aide d'une action de l'élément de manœuvre (15) configure la vanne (100) dans la seconde configuration de fonctionnement alternativement à la première configuration de fonctionnement dans laquelle l'ouverture traversante de liquide entre l'orifice d'entrée (1i) et l'orifice de sortie (1u) est maintenue dans un état de largeur prédéfinie quel que soit le différentiel de pression entre la pression (P+) présente dans la chambre auxiliaire (18c) et la pression (P-) présente dans le canal ; et/ou
où l'étape d'ajustement de la vanne (100) - à l'aide d'une action de l'élément de manœuvre (15) - configure la vanne (100) dans la troisième configuration de fonctionnement alternativement à la première configuration de fonctionnement ou alternativement à la seconde configuration de fonctionnement, dans laquelle l'ouverture traversante de liquide entre l'orifice d'entrée (1i) et l'orifice de sortie (1u) est maintenue en un état complètement fermé quelle que soit la valeur prise par le différentiel de pression entre la pression (P+) présente dans la chambre auxiliaire (18c) et la pression (P-) présente dans le canal ; le procédé comprenant en outre une étape de variation de la valeur prédéfinie du différentielle de pression entre la pression (P+) présente dans la chambre auxiliaire (18c) et la pression (P-) présente dans le canal à l'aide d'une variation de la position que l'élément de manœuvre (15) prend par rapport au corps de vanne (1) et où l'actionnement de l'élément de manœuvre (15) pour déterminer le passage depuis la première configuration de fonctionnement vers la troisième configuration de fonctionnement amène une réduction de la valeur prédéfinie du différentiel de pression.
